# EUROPEAN PATENT APPLICATION

(11) **EP 4 102 460 A1**
(43) Date of publication of application: **14.12.2022**
(21) Application number: 21751322.5
(22) Date of filing: 05.02.2021
(51) Int. Cl.: G06T 7/20

(54) **INFORMATION PROCESSING DEVICE, INFORMATION PROCESSING METHOD, AND INFORMATION PROCESSING PROGRAM**

(30) Priority: 06.02.2020 JP 2020018743
(71) Applicant: Sony Group Corporation, Tokyo 108-0075 (JP)
(72) Inventor: NISHIOKA, Hayato, Tokyo 141-0022 (JP); OKU, Takanori, Tokyo 141-0022 (JP); FURUYA, Shinichi, Tokyo 141-0022 (JP)
(74) Representative: MFG Patentanwälte Meyer-Wildhagen Meggle-Freund Gerhard PartG mbB
(86) International application number: PCT/JP2021/004301
(87) International publication number: WO 2021/157691

(57) **Abstract**

An information processing apparatus (100) includes an estimation unit (132) that estimates time-series information regarding a posture of a finger on the basis of image information including an operation of the finger with respect to an object including a contact operation of the finger with respect to the object and the object. The estimation unit (132) estimates the time-series information regarding the posture of the finger by using a first machine learning model learned to estimate the time-series information regarding the posture of the finger on the basis of the image information including the operation of the finger and the object.

## Description

### Field

The present invention relates to an information processing apparatus, an information processing method, and an information processing program.

### Background

Conventionally, there has been known a technique of recording and reproducing operations of fingers for the purpose of transmitting fine operations of excellent fingers of a musical instrument performer, a traditional craft worker, a cook, and the like to others (students and the like) and supporting the proficiency of others. For example, a technique has been proposed in which a probability map indicating the probability of presence of an attention point regarding a finger in a plurality of projection directions is specified on the basis of images of the finger projected in the plurality of projection directions, and a three-dimensional position of the attention point regarding the finger is estimated on the basis of the plurality of specified probability maps.

### Citation List

### Patent Literature

Patent Literature 1: WO 2018/083910 A

### Summary

### Technical Problem

However, in the above-described conventional technique, it is not always possible to appropriately estimate the posture of the finger. For example, in the above-described conventional technique, only a three-dimensional position of the attention point of the finger is estimated, and the posture of the finger is not necessarily appropriately estimated.

Therefore, the present disclosure proposes an information processing apparatus, an information processing method, and an information processing program capable of appropriately estimating the posture of the finger.

### Solution to Problem

To solve the above problem, an information processing apparatus comprising:
an estimation unit that estimates time-series information regarding a posture of a finger on the basis of image information including an operation of the finger with respect to an object including a contact operation of the finger with respect to the object and the object.

### Brief Description of Drawings

FIG. 1 is a diagram illustrating an example of information processing according to a first embodiment of the present disclosure.
FIG. 2 is a diagram illustrating a configuration example of an information processing system according to the embodiment.
FIG. 3 is a diagram illustrating a configuration example of an information processing apparatus according to the embodiment.
FIG. 4 is a diagram for describing an operation example of the information processing system according to the embodiment.
FIG. 5 is a diagram illustrating an arrangement example of a camera and illumination according to the embodiment.
FIG. 6 is a diagram illustrating an example of a set of camera arrangement and captured images according to the embodiment.
FIG. 7 is a diagram illustrating an example of a two-dimensional position of a feature point of a hand included in the captured image according to the embodiment.
FIG. 8 is a diagram illustrating an example of the two-dimensional position of the feature point of the hand included in the captured image according to the embodiment.
FIG. 9 is a diagram illustrating an example of the two-dimensional position of the feature point of the hand included in the captured image according to the embodiment.
FIG. 10 is a diagram illustrating a presentation example of information regarding a posture of a finger according to the embodiment.
FIG. 11 is a diagram illustrating a presentation example of information regarding the posture of the finger according to the embodiment.
FIG. 12 is a diagram for describing an operation example of an information processing system according to a modification of the embodiment.
FIG. 13 is a diagram for describing a finger passing method in piano playing.
FIG. 14 is a diagram illustrating a configuration example of an information processing system according to a second embodiment of the present disclosure.
FIG. 15 is a diagram illustrating a configuration example of a sensor information processing apparatus according to the embodiment.
FIG. 16 is a diagram illustrating a configuration example of an information processing apparatus according to the embodiment.
FIG. 17 is a diagram for describing an operation example of the information processing system according to the embodiment.
FIG. 18 is a diagram illustrating a mounting example of an IMU sensor according to the embodiment.
FIG. 19 is a diagram illustrating a mounting example of an IMU sensor according to the embodiment.
FIG. 20 is a diagram illustrating a configuration example of an information processing system according to a third embodiment of the present disclosure.
FIG. 21 is a diagram illustrating a configuration example of a sensor information processing apparatus according to the embodiment.
FIG. 22 is a diagram illustrating a configuration example of an information processing apparatus according to the embodiment.
FIG. 23 is a diagram for describing an operation example of the information processing system according to the embodiment.
FIG. 24 is a diagram for describing an outline of sensing by a wearable camera according to the embodiment.
FIG. 25 is a diagram for describing a structure of the wearable camera according to the embodiment.
FIG. 26 is a diagram for describing an operation example of an information processing system according to a modification of the embodiment.
FIG. 27 is a diagram illustrating a configuration example of an information processing system according to a fourth embodiment of the present disclosure.
FIG. 28 is a diagram illustrating a configuration example of an information processing apparatus according to the embodiment.
FIG. 29 is a diagram for describing an operation example of the information processing system according to the embodiment.
FIG. 30 is a diagram for describing a contact operation of a finger with respect to an object according to the embodiment.
FIG. 31 is a diagram for describing estimation processing of a joint angle of a finger according to the embodiment.
FIG. 32 is a hardware configuration diagram illustrating an example of a computer that implements functions of an information processing apparatus.

### Description of Embodiments

Hereinafter, embodiments of the present disclosure will be described in detail with reference to the drawings. In each of the following embodiments, the same parts are denoted by the same reference numerals, and redundant description will be omitted.

The present disclosure will be described according to the following order of items.
0. Introduction
1. First Embodiment
1.1. Outline of Information Processing System
1.2. Configuration Example of Information Processing System
1.3. Configuration Example of Information Processing Apparatus
1.4. Operation Example of Information Processing System
1.5. Arrangement Example of Camera and Illumination
1.6. Example of Set of Camera Arrangement and Captured Image
1.7. Two-Dimensional Position of Feature Point of Hand
1.8. Presentation Example of Information Regarding Posture of Finger
1.9. Modification
2. Second Embodiment
2.1. Finger Passing Method by Piano Performance
2.2. Configuration Example of Information Processing System
2.3. Configuration Example of Sensor Information Processing Apparatus
2.4. Configuration Example of Information Processing Apparatus
2.5. Operation Example of Information Processing System
2.6. Mounting Example of IMU Sensor
3. Third Embodiment
3.1. Configuration Example of Information Processing System
3.2. Configuration Example of Sensor Information Processing Apparatus
3.3. Configuration Example of Information Processing Apparatus
3.4. Operation Example of Information Processing System
3.5. Outline of Sensing by Wearable Camera
3.6. Structure of Wearable Camera
3.7. Modification
4. Fourth Embodiment
4.1. Configuration Example of Information Processing System
4.2. Operation Example of Information Processing System
4.3. Configuration Example of Information Processing Apparatus
4.4. Contact Operation of Finger with Respect to Object
4.5. Process for Estimating Joint Angle of Finger
5. Effects
6. Hardware Configuration

### [0. Introduction]

Recording and reproducing fine operations of excellent fingers of a musical instrument performer, a traditional craft worker, a cook, and the like are very important in transmitting skills of a skilled person to others (such as students). In addition, in skill proficiency assistance, it is very effective to record high-speed finger motions and present the motions to the user for intuitive transmission of implicit knowledge.

However, high spatial resolution and high temporal resolution are required for high-speed and fine finger motion recording. Conventionally, there have been many cases where emphasis is placed on gesture recognition, and it has not always been possible to recognize the motion of the finger with high accuracy.

Therefore, the information processing system according to the embodiment of the present disclosure narrows a photographing range to an operation range of a hand, installs a plurality of high-speed cameras on a plane in the environment, estimates the two-dimensional position or the like of each feature point of the hand from a photographed image by the high-speed camera, and estimates the posture of the finger on the basis of the estimated two-dimensional position or the like of the feature point. As a result, the information processing system can estimate the posture of the finger without mounting a sensor or a marker on the joint or the like of the finger. That is, the information processing system can estimate the posture of the finger without hindering the operation of the finger due to mounting of a sensor, a marker, or the like. Therefore, the information processing system can appropriately estimate the posture of the finger.

### [1. First Embodiment]

### [1.1. Outline of Information Processing System]

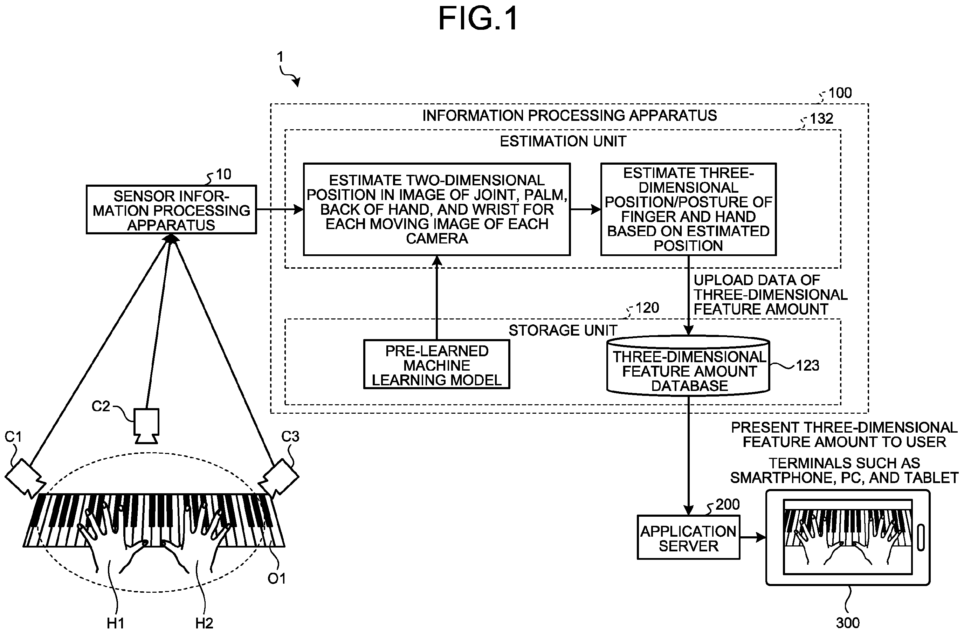

Here, an outline of information processing according to a first embodiment of the present disclosure will be described with reference to FIG. 1. FIG. 1 is a diagram illustrating an example of information processing according to the first embodiment of the present disclosure.

In the example illustrated in FIG. 1, three high-speed cameras C1 to C3 are installed on both sides of a keyboard of a piano and above the keyboard, and each of the three high-speed cameras C1 to C3 photographs a hand of a player playing the piano during performance from a position of each camera. For example, each of the three high-speed cameras C1 to C3 photographs a key hitting operation of a finger with respect to a keyboard or a moving operation of moving a position of the finger with respect to the keyboard.

A sensor information processing apparatus 10 acquires each of the three moving images photographed from the respective positions of the three high-speed cameras C1 to C3. Upon acquiring the three moving images, the sensor information processing apparatus 10 transmits the acquired three moving images to an information processing apparatus 100.

The information processing apparatus 100 estimates time-series information regarding a posture of the finger on the basis of image information including the operation of the finger with respect to an object including the contact operation of the finger with respect to the object and the object. In FIG. 1, the object is a keyboard, and the operation of the finger with respect to the object is a key hitting operation of the finger with respect to the keyboard or a moving operation of moving the position of the finger with respect to the keyboard.

Specifically, an estimation unit 132 of the information processing apparatus 100 estimates the two-dimensional positions of the feature points of finger joints, a palm, a back of a hand, and a wrist included in the moving image of each camera for each moving image of each camera (hereinafter, also referred to as a sensor image). For example, the estimation unit 132 of the information processing apparatus 100 estimates the two-dimensional positions of the feature points of the finger joints, the palm, the back of the hand, and the wrist included in the moving image of each camera by using a machine learning model M1 learned in advance so as to estimate the two-dimensional positions of the feature points of the finger joints, the palm, the back of the hand, and the wrist included in the moving image of each camera.

Subsequently, the estimation unit 132 of the information processing apparatus 100 estimates three-dimensional positions of the feature points of the finger joints, the palm, the back of the hand, and the wrist on the basis of the estimated two-dimensional positions of the feature points of the finger joint, the palm, the back of the hand, and the wrist included in the moving image of each camera. Subsequently, the estimation unit 132 of the information processing apparatus 100 estimates the time-series information of the posture of the finger on the basis of the three-dimensional positions of the feature points of the finger joints, the palm, the back of the hand, and the wrist. More specifically, the estimation unit 132 of the information processing apparatus 100 estimates, as the time-series information of the posture of the finger, time-series information of the position, speed, acceleration, or trajectory of the feature point of each joint of the finger or each fingertip, palm, back of hand, or wrist included in the moving image of each camera, or the angle, angular velocity, or angular acceleration (hereinafter, it is also referred to as a three-dimensional feature amount) of each joint of the finger.

Subsequently, the estimation unit 132 of the information processing apparatus 100 stores the estimated time-series information of the three-dimensional feature amount of the finger in a three-dimensional feature amount database 123 of a storage unit 120. Furthermore, the information processing apparatus 100 refers to the three-dimensional feature amount database 123 and transmits the time-series information of the three-dimensional feature amount to an application server 200.

The application server 200 acquires the time-series information of the three-dimensional feature amount. On the basis of the acquired time-series information of the three-dimensional feature amount, the application server 200 generates an image that enables visual recognition of the time-series information of the three-dimensional feature amount. Note that the application server 200 may generate a content in which the time-series information of the three-dimensional feature amount can be output together with sound. The application server 200 distributes the generated content to a terminal device 300 of a user.

The terminal device 300 displays an image that enables visual recognition of the time-series information of the three-dimensional feature amount. Furthermore, the terminal device 300 may output the time-series information of the three-dimensional feature amount together with sound.

### [1.2. Configuration Example of Information Processing System]

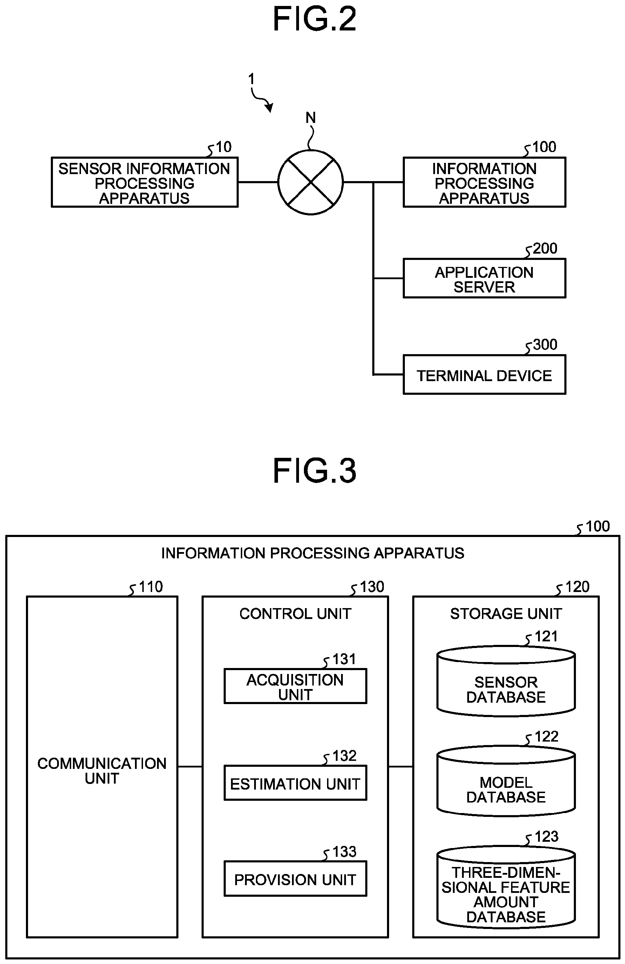

Next, a configuration of the information processing system according to the first embodiment of the present disclosure will be described with reference to FIG. 2. FIG. 2 is a diagram illustrating a configuration example of the information processing system according to the first embodiment of the present disclosure. As illustrated in FIG. 2, an information processing system 1 according to the first embodiment includes the sensor information processing apparatus 10, the information processing apparatus 100, the application server 200, and the terminal device 300.

The various devices illustrated in FIG. 2 are communicably connected in a wired or wireless manner via a network N (for example, the Internet). Note that the information processing system 1 illustrated in FIG. 2 may include an arbitrary number of sensor information processing apparatuses 10, an arbitrary number of information processing apparatuses 100, an arbitrary number of application servers 200, and an arbitrary number of terminal devices 300.

The sensor information processing apparatus 10 acquires an image photographed by a high-speed monochrome camera or a high-speed infrared camera from the high-speed monochrome camera or the high-speed infrared camera. The sensor information processing apparatus 10 acquires an image including an operation of a finger with respect to the object including a contact operation of the finger with respect to the object and the object. In addition, when acquiring the image from the camera, the sensor information processing apparatus 10 transmits image information including the operation of the finger with respect to the object including the contact operation of the finger with respect to the object and the object to the information processing apparatus 100.

The information processing apparatus 100 acquires, from the sensor information processing apparatus 10, image information including an operation of a finger with respect to an object including a contact operation of the finger with respect to the object and the object. Subsequently, the information processing apparatus 100 estimates the time-series information regarding the posture of the finger on the basis of the image information including the operation of the finger with respect to the object including the contact operation of the finger with respect to the object and the object. Furthermore, the information processing apparatus 100 transmits time-series information regarding the estimated posture of the finger to the application server 200. Note that the sensor information processing apparatus 10 and the information processing apparatus 100 may be an integrated apparatus. In this case, the information processing apparatus 100 acquires an image photographed by the high-speed monochrome camera or the high-speed infrared camera from the high-speed monochrome camera or the high-speed infrared camera. The information processing apparatus 100 acquires an image including the operation of the finger with respect to the object including a contact operation of the finger with respect to the object and the object.

The application server 200 acquires the time-series information regarding the posture of the finger estimated by the information processing apparatus 100 from the information processing apparatus 100. When acquiring the time-series information regarding the posture of the finger, the application server 200 generates the content (for example, moving image or voice) for presenting the time-series information regarding the posture of the finger to the user. When generating the content, the application server 200 distributes the generated content to the terminal device 300.

The terminal device 300 is an information processing apparatus used by a user. The terminal device 300 is realized by, for example, a smartphone, a tablet terminal, a notebook personal computer (PC), a mobile phone, a personal digital assistant (PDA), or the like. Furthermore, the terminal device 300 includes a screen such as a liquid crystal display and having a touch panel function, and receives various operations on content such as an image displayed on the screen, such as a tap operation, a slide operation, and a scroll operation, from the user with a finger, a stylus, or the like. Furthermore, the terminal device 300 includes a speaker and outputs a voice.

The terminal device 300 receives the content from the application server 200. When receiving the content, the terminal device 300 displays the received content (for example, moving image) on the screen. Furthermore, the terminal device 300 displays the moving image on the screen and outputs sound (for example, piano sound) in accordance with the moving image.

### [1.3. Configuration Example of Information Processing Apparatus]

Next, a configuration of the information processing apparatus according to the first embodiment of the present disclosure will be described with reference to FIG. 3. FIG. 3 is a diagram illustrating a configuration example of the information processing apparatus according to the first embodiment of the present disclosure. As illustrated in FIG. 3, the information processing apparatus 100 according to the first embodiment includes a communication unit 110, the storage unit 120, and a control unit 130.

### (Communication Unit 110)

The communication unit 110 wirelessly communicates with an external information processing apparatus such as the sensor information processing apparatus 10, the application server 200, or the terminal device 300 via the network N. The communication unit 110 is realized by, for example, a network interface card (NIC), an antenna, or the like. The network N may be a public communication network such as the Internet or a telephone network, or may be a communication network provided in a limited area such as a local area network (LAN) or a wide area network (WAN). Note that the network N may be a wired network. In that case, the communication unit 110 performs wired communication with an external information processing apparatus.

### (Storage Unit 120)

The storage unit 120 is realized by, for example, a semiconductor memory element such as a random access memory (RAM) or a flash memory, or a storage device such as a hard disk or an optical disk. The storage unit 120 stores various programs, setting data, and the like. As illustrated in FIG. 3, the storage unit 120 includes a sensor database 121, a model database 122, and the three-dimensional feature amount database 123.

### (Sensor Database 121)

The sensor database 121 stores the image information acquired from the sensor information processing apparatus 10. Specifically, the sensor database 121 stores information regarding the image including the operation of the finger with respect to the object including the contact operation of the finger with respect to the object and the object.

### (Model Database 122)

The model database 122 stores information regarding the machine learning model. Specifically, the model database 122 stores information regarding a first machine learning model learned to estimate time-series information regarding the posture of the finger (time-series information of the three-dimensional feature amount of the finger) on the basis of image information including the operation of the finger and the object. For example, the model database 122 stores model data MDT1 of the first machine learning model.

The model data MDT1 may include an input layer to which the image information including the operation of the finger and the object is input, an output layer, a first element belonging to any layer from the input layer to the output layer other than the output layer, and a second element whose value is calculated on the basis of the first element and a weight of the first element, and may function the information processing apparatus 100 so that the information processing apparatus 100 outputs, from the output layer, the time-series information of the three-dimensional feature amount of the finger included in the image information input to the input layer according to the image information input to the input layer.

Here, it is assumed that the model data MDT1 is realized by a regression model indicated by "y = a1 * x1 + a2 * x2 +... + ai * xi". In this case, the first element included in the model data MDT1 corresponds to input data (xi) such as x1 and x2. Further, the weight of the first element corresponds to the coefficient ai corresponding to xi. Here, the regression model can be regarded as a simple perceptron having the input layer and the output layer. When each model is regarded as a simple perceptron, the first element can be regarded as any node included in the input layer, and the second element can be regarded as a node included in the output layer.

In addition, it is assumed that the model data MDT1 is realized by a neural network having one or a plurality of intermediate layers such as a deep neural network (DNN). In this case, the first element included in the model data MDT1 corresponds to any node included in the input layer or the intermediate layer. In addition, the second element corresponds to a node at a next stage which is a node to which a value is transmitted from a node corresponding to the first element. In addition, the weight of the first element corresponds to a connection coefficient that is a weight considered for a value transmitted from the node corresponding to the first element to the node corresponding to the second element.

The information processing apparatus 100 calculates the time-series information of the three-dimensional feature amount of the finger included in the image information using a model having an arbitrary structure such as the regression model or the neural network described above. Specifically, in the model data MDT1, when the image information including the operation of the finger and the object is input, a coefficient is set so as to output the time-series information of the three-dimensional feature amount of the finger included in the image information. The information processing apparatus 100 calculates the time-series information of the three-dimensional feature amount of the finger using such model data MDT1.

### (Three-dimensional Feature Amount Database 123)

The three-dimensional feature amount database 123 stores time-series information of the three-dimensional feature amount that is the position, speed, acceleration, or trajectory of the feature point of each joint of the finger or each fingertip, the palm, the back of the hand, or the wrist included in the moving image of each camera, or the angle, angular velocity, or angular acceleration of each joint of the finger.

### (Control Unit 130)

The control unit 130 is realized by executing various programs (corresponding to an example of an information processing program) stored in a storage device inside the information processing apparatus 100 using a RAM as a work area by a central processing unit (CPU), a micro processing unit (MPU), or the like. Furthermore, the control unit 130 is realized by, for example, an integrated circuit such as an application specific integrated circuit (ASIC) or a field programmable gate array (FPGA).

As illustrated in FIG. 3, the control unit 130 includes an acquisition unit 131, the estimation unit 132, and a provision unit 133, and realizes or executes an action of information processing described below. Note that an internal configuration of the control unit 130 is not limited to the configuration illustrated in FIG. 3, and may be another configuration as long as information processing to be described later is performed.

### (Acquisition Unit 131)

The acquisition unit 131 acquires the image information including the operation of the finger with respect to the object including the contact operation of the finger with respect to the object and the object. Specifically, the acquisition unit 131 acquires the image information from the sensor information processing apparatus 10. More specifically, the acquisition unit 131 acquires a plurality of pieces of image information acquired by each of a plurality of cameras installed so as to photograph the object from a plurality of different directions. For example, the acquisition unit 131 acquires a plurality of pieces of image information photographed by three or more cameras installed on both sides of the object and above the object.

### (Estimation Unit 132)

The estimation unit 132 estimates the time-series information regarding the posture of the finger on the basis of the image information including the operation of the finger with respect to the object including the contact operation of the finger with respect to the object and the object. Specifically, the estimation unit 132 estimates the time-series information of the three-dimensional feature amount of the finger as the time-series information regarding the posture of the finger. For example, the estimation unit 132 estimates, as the time-series information regarding the posture of the finger, time-series information of the position, speed, acceleration, or trajectory of the feature point of each joint of the finger or each fingertip, palm, back of hand, or wrist, or the angle, angular velocity, or angular acceleration of each joint of the finger.

More specifically, the estimation unit 132 estimates, for each moving image of each camera, two-dimensional positions of the feature points of the finger joint, the palm, the back of the hand, and the wrist included in the moving image of each camera. For example, the estimation unit 132 estimates the two-dimensional positions of the feature points of the finger joints, the palm, the back of the hand, and the wrist included in the moving image of each camera by using the machine learning model learned in advance to estimate the two-dimensional positions of the feature points of the finger joints, the palm, the back of the hand, and the wrist included in the moving image of each camera.

Subsequently, the estimation unit 132 estimates the three-dimensional positions of the feature points of the finger joint, the palm, the back of the hand, and the wrist on the basis of the estimated two-dimensional positions of the feature points of the finger joints, the palm, the back of the hand, and the wrist included in the moving image of each camera. Subsequently, the estimation unit 132 estimates the time-series information of the posture of the finger on the basis of the three-dimensional positions of the feature points of the finger joint, the palm, the back of the hand, and the wrist. More specifically, the estimation unit 132 estimates, as the time-series information of the posture of the finger, time-series information of the position, speed, acceleration, or trajectory of the feature point of each joint of the finger or each fingertip, palm, back of hand, or the wrist included in the moving image of each camera, or the angle, angular velocity, or angular acceleration (hereinafter, it is also referred to as a three-dimensional feature amount) of each joint of the finger.

Furthermore, the estimation unit 132 may estimate the time-series information regarding the posture of the finger by using the first machine learning model learned to estimate the time-series information regarding the posture of the finger on the basis of the image information including the operation of the finger and the object. For example, the estimation unit 132 inputs image information including the operation of the finger and the object to the first machine learning model, and estimates, as time-series information of the posture of the finger, time-series information of the position, speed, acceleration, or trajectory of the feature point of each joint of the finger or each fingertip, palm, back of the hand, or wrist included in the moving image of each camera, or the angle, angular velocity, or angular acceleration (hereinafter, it is also referred to as a three-dimensional feature amount) of each joint of the finger.

### (Provision Unit 133)

The provision unit 133 provides the user with time-series information regarding the posture of the finger estimated by the estimation unit 132. Specifically, when acquiring the time-series information regarding the posture of the finger with reference to the three-dimensional feature amount database 123, the provision unit 133 generates the content (for example, moving image or voice) for presenting the time-series information regarding the posture of the finger to the user. For example, the provision unit 133 generates an image in which the posture of the finger and the position, speed, and acceleration of the feature point are represented by arrows or colors. Furthermore, the provision unit 133 generates a content that presents the generated image and sound together. Subsequently, the provision unit 133 distributes the generated content to the terminal device 300.

Note that the provision unit 133 may transmit the time-series information regarding the posture of the finger to the application server 200, and provide the time-series information regarding the posture of the finger to the user via the application server 200.

### [1.4. Operation Example of Information Processing System]

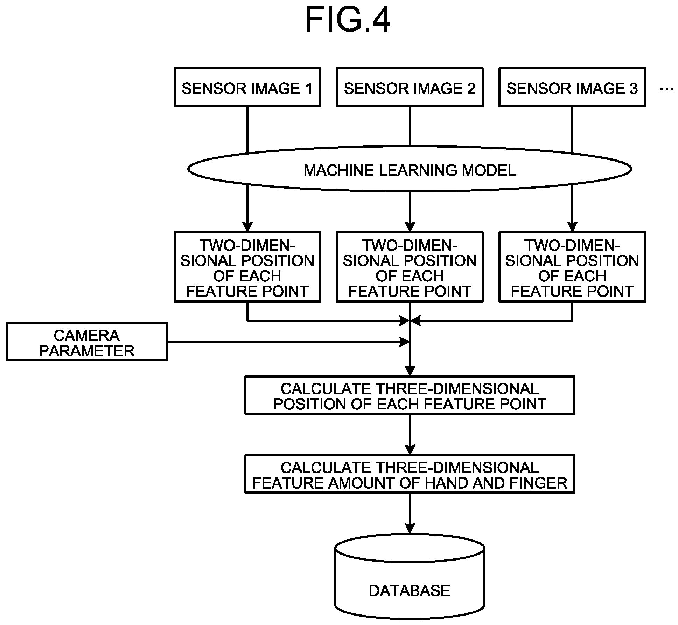

Next, an operation of the information processing system according to the first embodiment of the present disclosure will be described with reference to FIG. 4. FIG. 4 is a diagram for describing an operation example of the information processing system according to the first embodiment of the present disclosure. In the example illustrated in FIG. 4, the information processing apparatus 100 acquires sensor images 1, 2, 3,... respectively photographed by a plurality of high-speed cameras installed in the environment. Subsequently, the information processing apparatus 100 inputs the acquired sensor images 1, 2, 3,... to the machine learning model M1. The information processing apparatus 100 estimates, as output information of the machine learning model M1, each of two-dimensional positions of feature points of a finger joint, a palm, a back of hand, and a wrist included in each of the sensor images 1, 2, 3,....

Subsequently, the information processing apparatus 100 estimates the three-dimensional positions of the feature points of the finger joint, the palm, the back of the hand, and the wrist on the basis of the two-dimensional positions of the feature points of the finger joint, the palm, the back of the hand, and the wrist included in the estimated sensor images and the camera parameters. Subsequently, the information processing apparatus 100 estimates the time-series information of the three-dimensional feature amounts of the fingers on the basis of the three-dimensional positions of the feature points of the finger joint, the palm, the back of the hand, and the wrist. Subsequently, the information processing apparatus 100 stores the time-series information of the three-dimensional feature amount of the finger in the database.

### [1.5. Arrangement Example of Camera and Illumination]

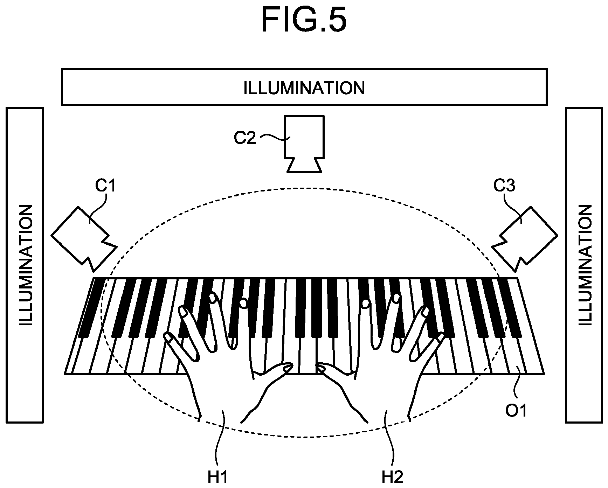

Next, arrangement of a camera and an illumination according to the first embodiment of the present disclosure will be described with reference to FIG. 5. FIG. 5 is a diagram illustrating an arrangement example of the camera and the illumination according to the first embodiment of the present disclosure. In FIG. 5, a plurality of cameras is installed so as to photograph the keyboard as the object from a plurality of different directions. Specifically, three cameras C1 to C3 are installed on both sides of the keyboard and above the keyboard. In addition, the image information is a plurality of pieces of image information acquired by each of a plurality of cameras installed so as to photograph the object from a plurality of different directions. Specifically, the image information is a plurality of pieces of image information photographed by three or more cameras installed on both sides of the object and above the object.

In the case of photographing with a high-speed camera, an amount of light is often insufficient in a general environment, and thus, a light source of infrared rays or visible light lines or surfaces is installed so as to surround a work space. In the example illustrated in FIG. 5, the illumination of the camera is installed on a gate-shaped structure surrounding the keyboard of the piano. In addition, the three cameras C1 to C3 are attached to a gate-shaped structure surrounding the keyboard of the piano, and each piece of image information photographed by each camera is photographed in a state where the finger is illuminated by a light source installed in the vicinity of each of the three cameras C1 to C3. In this manner, the plurality of cameras is attached to a gate-shaped structure surrounding the object, and each of the plurality of pieces of image information is the plurality of pieces of image information photographed in a state where the finger is illuminated by the light source installed in the vicinity of each of the cameras. As a result, the hand is also irradiated with light from the side, and the finger is not hidden by the shadow of the hand. Note that a ring light may be attached to each camera. In addition, eaves may be provided on the player side so that the lighting does not enter the eyes.

In addition, in the case of photographing a high-speed operation such as piano performance, it is necessary to increase a shutter speed, and it is desirable to use a monochrome camera or an infrared camera in order to secure the light amount so as not to affect the player. In FIG. 5, the cameras C1 to C3 which are high-speed monochrome cameras (for example, 90 fps or more) are attached to the environment. The image information photographed by the cameras C1 to C3 is image information photographed by the high-speed monochrome camera or the high-speed infrared camera. Note that the monochrome camera is more suitable for high-speed photographing (increasing the amount of light with visible light affects an operation of a person to be measured) by capturing infrared light as well, and an RGB camera (hereinafter, it is also referred to as a normal camera) can also be used. In addition, the camera is mounted in a frame or a room so as to be on one plane. As a result, epipolar geometry can be used for calculation, and improvement in calculation accuracy can be expected.

In addition, since a thumb and a little finger are often hidden by the hand during playing of the piano, the camera is also arranged on the opposite side to a photographing direction. This can cover that the thumb and the little finger are hidden by the hand. Specifically, the camera is installed by tilting the camera on the opposite side in a range from parallel to the ground contact surface to about 45 degrees. As a result, even when there are only three cameras as illustrated in FIG. 5, the thumb and the little finger can be tracked by two or more cameras, and data loss at the time of three-dimensional position estimation of the finger is reduced.

In addition, an imaging range of the camera is narrowed to a range in which a hand can be photographed. Since the resolution of the camera is finite, the resolution and accuracy of position estimation are improved when the photographing range is narrowed (for example, when a range of 1 m is captured by a 2000 px sensor, the resolution is 0.5 mm) . In the example illustrated in FIG. 5, the photographing range of the cameras C1 to C3 is a range from the fingertips of the fingers to the wrists of the left hand H1 and the right hand H2 of the player. In addition, the image information is image information photographed with a range from the fingertip of the finger to the wrist as a photographing range.

### [1.6. Example of Set of Camera Arrangement and Captured Image]

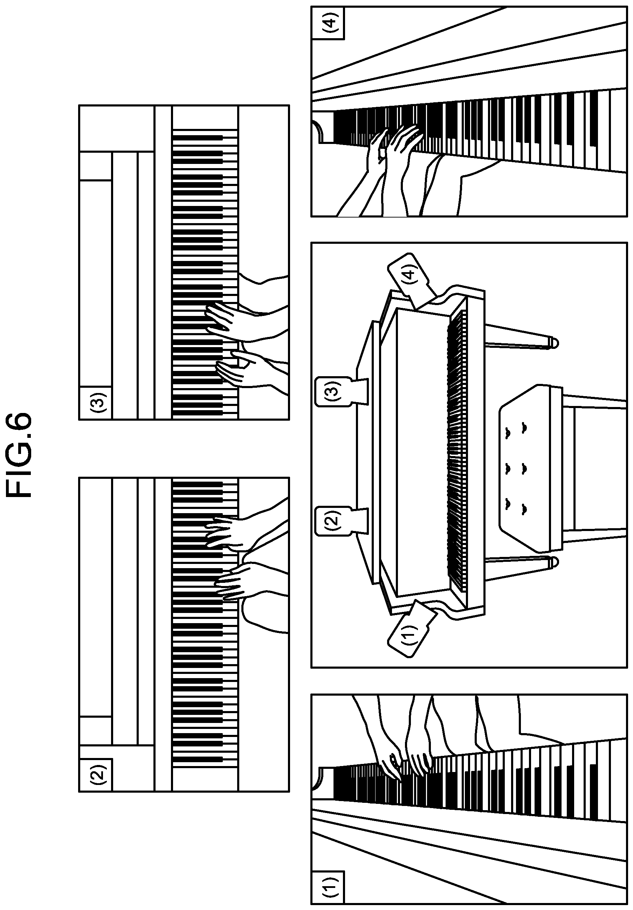

Next, a set of the camera arrangement and the captured images according to the first embodiment of the present disclosure will be described with reference to FIG. 6. FIG. 6 is a diagram illustrating an example of a set of the camera arrangement and the captured images according to the first embodiment of the present disclosure.

In the example illustrated in FIG. 6, four cameras (1) to (4) are installed so as to photograph the keyboard as the object from a plurality of different directions. Specifically, the four cameras (1) to (4) are installed on both sides of the keyboard and above the keyboard.

In addition, the image information is a plurality of pieces of image information acquired by each of a plurality of cameras installed so as to photograph the object from a plurality of different directions. Specifically, the image photographed by the camera (1) is an image photographed by the camera (1) installed on the left side of the keyboard. The image photographed by the camera (2) is an image photographed by the camera (2) installed on the upper left of the keyboard. The image photographed by the camera (3) is an image photographed by the camera (3) installed on the upper right of the keyboard. The image photographed by the camera (4) is an image photographed by the camera (4) installed on the upper right of the keyboard.

### [1.7. Two-Dimensional Position of Feature Point of Hand]

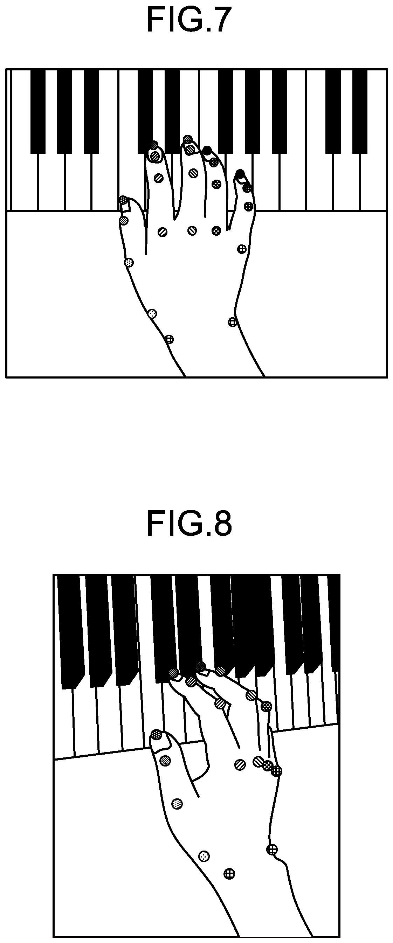

Next, the two-dimensional position of the feature point of the hand included in the captured image by each camera according to the first embodiment of the present disclosure will be described with reference to FIGS. 7 to 9.

First, the two-dimensional position of the feature point of the hand included in the captured image according to the first embodiment of the present disclosure will be described with reference to FIG. 7. FIG. 7 is a diagram illustrating an example of the two-dimensional position of the feature point of the hand included in the captured image according to the first embodiment of the present disclosure; FIG. 7 illustrates an example of the two-dimensional position of the feature point of the hand included in the image photographed by the camera installed above the keyboard.

Next, the two-dimensional position of the feature point of the hand included in the captured image according to the first embodiment of the present disclosure will be described with reference to FIG. 8. FIG. 8 is a diagram illustrating an example of the two-dimensional position of the feature point of the hand included in the captured image according to the first embodiment of the present disclosure. FIG. 8 illustrates an example of the two-dimensional position of the feature point of the hand included in the image photographed by the camera installed on the left side of the keyboard.

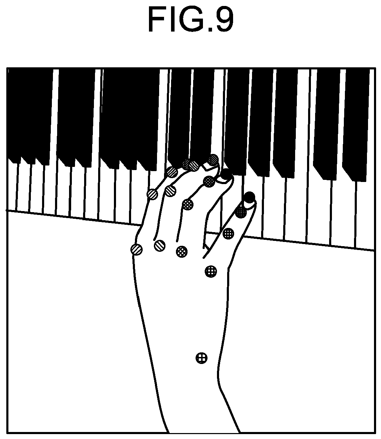

Next, the two-dimensional position of the feature point of the hand included in the captured image according to the first embodiment of the present disclosure will be described with reference to FIG. 9. FIG. 9 is a diagram illustrating an example of the two-dimensional position of the feature point of the hand included in the captured image according to the first embodiment of the present disclosure. FIG. 9 illustrates an example of the two-dimensional position of the feature point of the hand included in the image photographed by the camera installed on the right side of the keyboard.

### [1.8. Presentation Example of Information Regarding Posture of Finger]

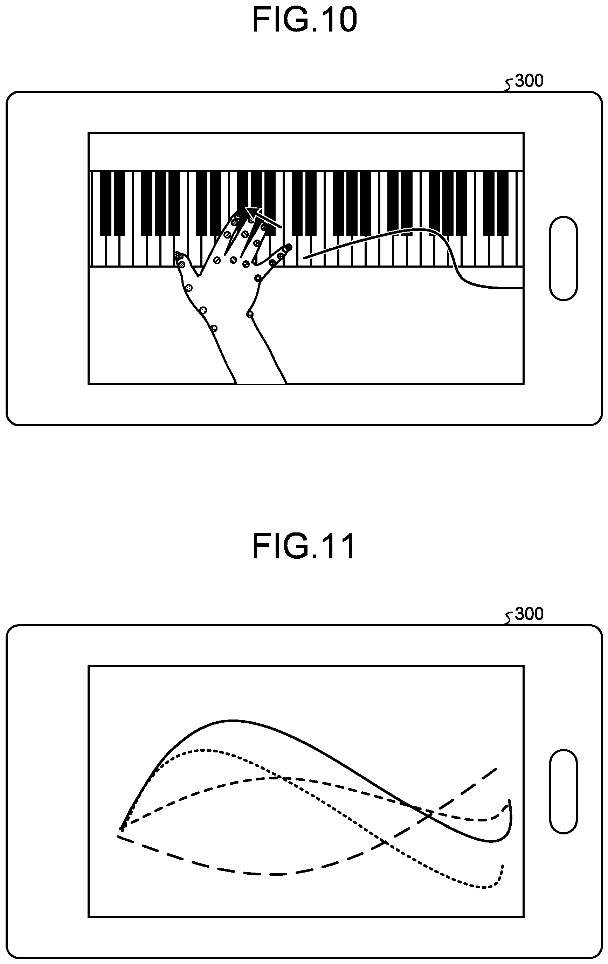

Next, presentation of information regarding the posture of the finger according to the first embodiment of the present disclosure will be described with reference to FIGS. 10 and 11. First, will be described with reference to FIG. 10. FIG. 10 is a diagram illustrating a presentation example of information regarding the posture of the finger according to the first embodiment of the present disclosure. In the example illustrated in FIG. 10, the provision unit 133 provides an image in which the trajectory of the movement of the finger is represented by overlapping lines. The terminal device 300 displays an image in which the trajectory of the movement of the finger is represented by overlapping lines. In addition, the terminal device 300 outputs the piano playing sound together with the movement of the fingers.

Next, presentation of information regarding the posture of the finger according to the first embodiment of the present disclosure will be described with reference to FIG. 11. FIG. 11 is a diagram illustrating a presentation example of information regarding the posture of the finger according to the first embodiment of the present disclosure. In the example illustrated in FIG. 11, the provision unit 133 provides a content in which temporal changes such as the speed and the angle of the finger are represented by a graph. The terminal device 300 displays the content in which the temporal change such as the speed and the angle of the finger is represented by a graph.

### [1.9. Modification]

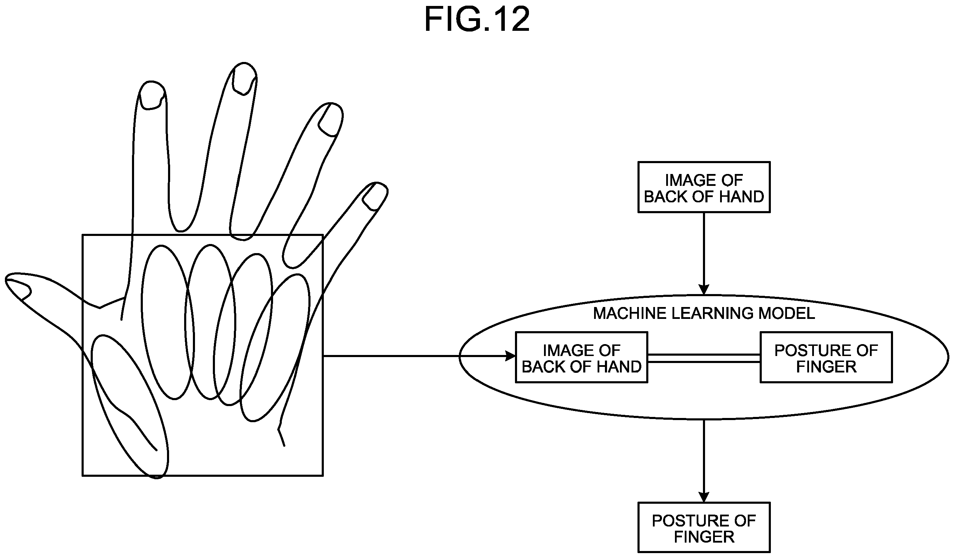

Next, an operation of an information processing system according to a modification of the first embodiment of the present disclosure will be described with reference to FIG. 12. FIG. 12 is a diagram for describing an operation example of the information processing system according to the modification of the first embodiment of the present disclosure. The operation of the fingers also appears on the back of the hand as the operation of tendons. Therefore, in the example illustrated in FIG. 12, the estimation unit 132 estimates the time-series information regarding the posture of the finger on the basis of the image information of the back of the hand performing the operation of the finger.

Specifically, the estimation unit 132 estimates the time-series information regarding the posture of the finger by using a second machine learning model learned to estimate the time-series information regarding the posture of the finger on the basis of the image information of the back of the hand performing the operation of the finger. For example, the estimation unit 132 extracts image information of the feature region of the back of the hand from image information photographed by a high-speed camera installed in the environment. For example, the estimation unit 132 extracts image information of the portion of the tendon of the back of the hand as the image information of the feature region of the back of the hand. Subsequently, the estimation unit 132 estimates the time-series information regarding the angle of the finger joint using the second machine learning model learned to estimate the time-series information regarding the angle of the finger joint on the basis of the image information of the feature region of the back of the hand.

For example, the estimation unit 132 acquires image information photographed by a high-speed camera installed in the environment from the sensor information processing apparatus 10. Subsequently, the estimation unit 132 extracts the feature region of the back of the hand from the acquired image information. Subsequently, the estimation unit 132 inputs the image information of the extracted feature region of the back of the hand to the second machine learning model, and estimates the time-series information regarding the angle of the finger joint included in the image photographed by the high-speed camera.

### [2. Second Embodiment]

### [2.1. Finger Passing Method by Piano Performance]

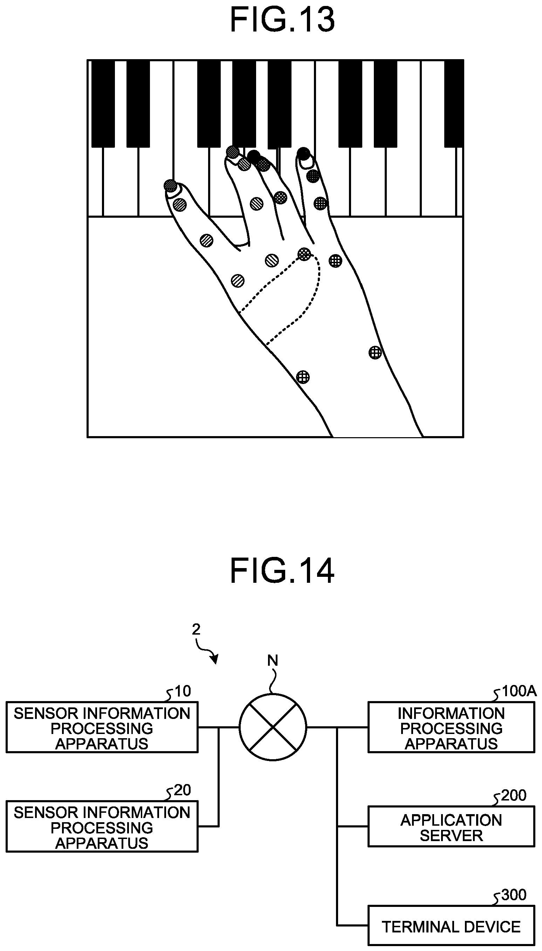

Next, a finger passing method in piano playing will be described with reference to FIG. 13. FIG. 13 is a diagram for describing the finger passing method in piano playing. Piano performance includes a technique called "finger passing" in which an index finger plays across a thumb, and the thumb may be hidden. The dotted line illustrated in FIG. 13 indicates the position of the thumb that is hidden behind the palm and cannot be seen when the hand performing the finger passing method in piano playing is viewed from directly above.

Due to the "finger passing" illustrated in FIG. 13, when the thumb is at a position as indicated by a dotted line, it is difficult for the camera attached to the environment to perform photographing from any angle. Therefore, in an information processing system 2, the posture estimation of the finger which is difficult to perform the photographing by the camera installed in the environment is complemented by sensing data detected by a plurality of IMU sensors installed on a thumb and a back of a hand of a user.

### [2.2. Configuration Example of Information Processing System]

Next, a configuration of the information processing system according to the second embodiment of the present disclosure will be described with reference to FIG. 14. FIG. 14 is a diagram illustrating a configuration example of the information processing system according to the second embodiment of the present disclosure. As illustrated in FIG. 14, the information processing system 2 according to the second embodiment is different from the information processing system 1 according to the first embodiment in including a sensor information processing apparatus 20. Furthermore, the information processing system 2 according to the second embodiment is different in including an information processing apparatus 100A instead of the information processing apparatus 100 of the information processing system 1 according to the first embodiment. Therefore, in the following description, the sensor information processing apparatus 20 will be mainly described, and detailed description of other configurations included in the information processing system 2 according to the second embodiment will be omitted.

The various devices illustrated in FIG. 14 are communicably connected in a wired or wireless manner via a network N (for example, the Internet). Note that the information processing system 2 illustrated in FIG. 14 may include an arbitrary number of sensor information processing apparatuses 10, an arbitrary number of sensor information processing apparatuses 20, an arbitrary number of information processing apparatuses 100A, an arbitrary number of application servers 200, and an arbitrary number of terminal devices 300.

The sensor information processing apparatus 20 acquires, from each of a plurality of IMU sensors, sensing data detected by each of the plurality of IMU sensors installed on the thumb and the back of the hand of the user. In addition, the sensor information processing apparatus 20 estimates a relative posture between the plurality of IMU sensors on the basis of the sensing data acquired from each of the plurality of IMU sensors. When estimating the relative posture between the plurality of IMU sensors, the sensor information processing apparatus 20 transmits information regarding the estimated relative posture between the plurality of IMU sensors to the information processing apparatus 100A.

The information processing apparatus 100A acquires the sensing data detected by each of the plurality of IMU sensors from the sensor information processing apparatus 20. The information processing apparatus 100A estimates the posture of the finger that is difficult to be photographed by the camera installed in the environment on the basis of the sensing data. Note that the sensor information processing apparatus 20 and the information processing apparatus 100A may be an integrated apparatus. In this case, the information processing apparatus 100A acquires the sensing data detected by each of the plurality of IMU sensors installed on the thumb and the back of the hand of the user from each of the plurality of IMU sensors. In addition, the information processing apparatus 100A estimates the relative posture between the plurality of IMU sensors on the basis of the sensing data acquired from each of the plurality of IMU sensors.

### [2.3. Configuration Example of Sensor Information Processing Apparatus]

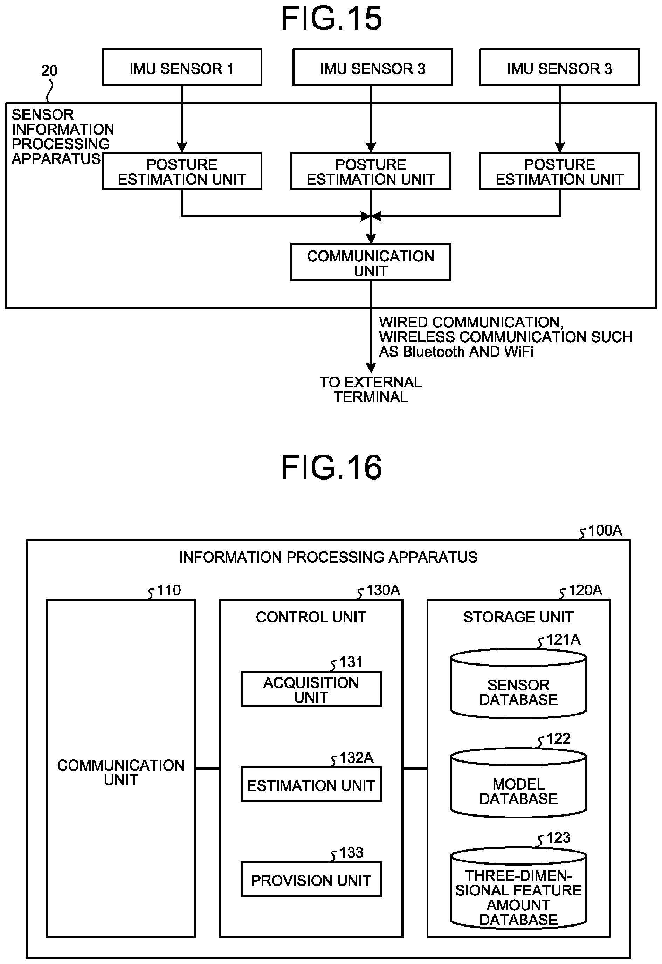

Next, a configuration of the sensor information processing apparatus according to the second embodiment of the present disclosure will be described with reference to FIG. 15. FIG. 15 is a diagram illustrating a configuration example of the sensor information processing apparatus according to the second embodiment of the present disclosure. In the example illustrated in FIG. 15, the sensor information processing apparatus 20 includes a posture estimation unit and a communication unit.

Each posture estimation unit acquires sensing data from each of three IMU sensors 1 to 3. The posture estimation unit estimates a relative posture between the three IMU sensors 1 to 3 based on the sensing data acquired from each of the three IMU sensors 1 to 3. When estimating the relative posture between the three IMU sensors 1 to 3, the posture estimation unit outputs information regarding the estimated posture to the communication unit.

The communication unit communicates with the information processing apparatus 100A via the network N. Furthermore, the communication unit may wirelessly communicate with the information processing apparatus 100A using communication by Wi-Fi (registered trademark), ZigBee (registered trademark), Bluetooth (registered trademark), Bluetooth Low Energy (registered trademark), ANT (registered trademark), ANT+ (registered trademark), EnOcean Alliance (registered trademark), or the like.

The communication unit acquires the information regarding the relative posture between the three IMU sensors 1 to 3 from the posture estimation unit. Upon acquiring the information regarding the relative posture between the three IMU sensors 1 to 3, the communication unit transmits the acquired information regarding the relative posture to the information processing apparatus 100A.

### [2.4. Configuration Example of Information Processing Apparatus]

Next, a configuration of the information processing apparatus according to the second embodiment of the present disclosure will be described with reference to FIG. 16. FIG. 16 is a diagram illustrating a configuration example of the information processing apparatus according to the second embodiment of the present disclosure. As illustrated in FIG. 16, the information processing apparatus 100A according to the second embodiment is different from the information processing apparatus 100 according to the first embodiment in that an estimation unit 132A and a sensor database 121A are provided instead of the estimation unit 132 and the sensor database 121. Therefore, in the following description, the estimation unit 132A and the sensor database 121A will be mainly described, and detailed description of other configurations included in the information processing apparatus 100A according to the second embodiment will be omitted.

### (Sensor Database 121A)

The sensor database 121A is different from the sensor database 121 of the information processing apparatus 100 according to the first embodiment in that it stores the information regarding the relative postures between the plurality of IMU sensors acquired from the sensor information processing apparatus 20. The sensor database 121A stores information regarding the relative postures between the plurality of IMU sensors installed on the thumb and the back of the hand of the user acquired by the acquisition unit 131.

### (Estimation Unit 132A)

The estimation unit 132A estimates time-series information regarding the posture of the user's finger on the basis of the sensing data detected by the plurality of IMU sensors installed on the thumb and the back of the hand of the user. Specifically, the estimation unit 132A acquires information regarding the relative posture between the plurality of IMU sensors installed on the thumb and the back of the hand of the user with reference to the sensor database 121A. In addition, the estimation unit 132A acquires information regarding the model of the finger in which the plurality of IMU sensors is installed.

Subsequently, the estimation unit 132A estimates the three-dimensional positions of the feature points of the finger joint, the palm, the back of the hand, and the wrist on the basis of the information regarding the relative posture between the plurality of IMU sensors, the information regarding the model of the finger, and the estimated information regarding the two-dimensional positions of the feature points of the finger joint, the palm, the back of the hand, and the wrist included in the moving image of each camera.

For example, in a case where the feature point of the predetermined finger is determined not to be included in the moving image of each camera, the estimation unit 132A estimates the three-dimensional position of the feature point of the predetermined finger on the basis of the information regarding the relative posture between the plurality of IMU sensors and the information regarding the model of the finger. In addition, in a case where the feature point of the predetermined finger is included in the moving image of each camera, but the accuracy is determined to be low, the estimation unit 132A estimates the three-dimensional position of the feature point of the predetermined finger by weighting and averaging the accuracy of the three-dimensional position of the feature point of the predetermined finger estimated on the basis of the information regarding the relative posture between the plurality of IMU sensors and the information regarding the finger model and the accuracy of the three-dimensional position of the feature point of the predetermined finger estimated on the basis of the moving image of each camera.

Subsequently, the estimation unit 132A estimates the time-series information of the posture of the predetermined finger on the basis of the estimated three-dimensional position of the predetermined finger. More specifically, the estimation unit 132A estimates the time-series information of the three-dimensional feature amount of the predetermined finger as the time-series information of the posture of the predetermined finger.

Furthermore, the estimation unit 132A may increase the weight of the value estimated on the basis of the information regarding the IMU sensor for the angle of the joint of the finger to which the IMU sensor is attached. Furthermore, in a case where there is a sensor image regarding the position of the finger joint to which the IMU sensor is attached, the estimation unit 132A may complement the position by using information of the sensor image. As a result, it is possible to expect not only the complementation of the position of the hidden finger but also the improvement of the accuracy of the angle estimation of the hidden finger joint.

### [2.5. Operation Example of Information Processing System]

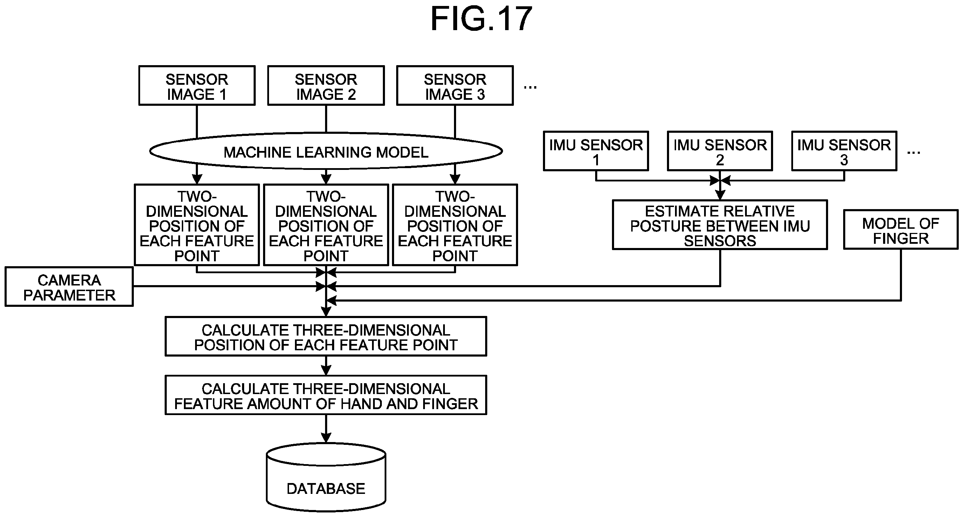

Next, an operation of the information processing system according to the second embodiment of the present disclosure will be described with reference to FIG. 17. FIG. 17 is a diagram for describing an operation example of the information processing system according to the second embodiment of the present disclosure. In the example illustrated in FIG. 17, similarly to FIG. 4, the information processing apparatus 100A acquires sensor images 1, 2, 3,... respectively photographed by a plurality of high-speed cameras installed in the environment. Subsequently, the information processing apparatus 100A inputs the acquired sensor images 1, 2, 3,... to the machine learning model M1. The information processing apparatus 100A estimates, as output information of the machine learning model M1, each of two-dimensional positions of feature points of the finger joint, the palm, the back of the hand, and the wrist included in each of the sensor images 1, 2, 3,.... Furthermore, the information processing apparatus 100A acquires the camera parameters of each of the plurality of high-speed cameras.

Furthermore, in FIG. 17, in the information processing apparatus 100A, the information processing apparatus 100A acquires sensing data detected from each of the plurality of IMU sensors 1, 2, 3,... installed on a predetermined finger and the back of the hand of the user. Subsequently, the information processing apparatus 100A estimates the relative posture between the plurality of IMU sensors on the basis of the acquired sensing data. Furthermore, the information processing apparatus 100A acquires the information regarding the model of the finger on which the plurality of IMU sensors is installed.

Subsequently, the information processing apparatus 100A estimates the three-dimensional positions of the feature points of the finger joint, the palm, the back of the hand, and the wrist on the basis of the information regarding the relative posture between the plurality of IMU sensors, the information regarding the model of the finger, and the estimated information regarding the two-dimensional positions of the feature points of the finger joint, the palm, the back of the hand, and the wrist included in the moving image of each camera.

For example, similarly to FIG. 4, the information processing apparatus 100A estimates the three-dimensional positions of the feature points of the finger joint, the palm, the back of the hand, and the wrist on the basis of the information regarding the two-dimensional positions of the feature points of the finger joint, the palm, the back of the hand, and the wrist included in the estimated moving image of each camera. Furthermore, in a case where it is determined that the feature point of the predetermined finger (for example, the finger such as the thumb hidden by the finger clasping method) is not included in the moving image of each camera, the information processing apparatus 100A estimates the three-dimensional position of the feature point of the predetermined finger on the basis of the information regarding the relative posture between the plurality of IMU sensors and the information regarding the model of the finger. In addition, in a case where it is determined that the feature point of the predetermined finger is included in the moving image of each camera but the accuracy thereof is low, the information processing apparatus 100A estimates the three-dimensional position of the feature point of the predetermined finger by weighting and averaging the accuracy of the three-dimensional position of the feature point of the predetermined finger estimated on the basis of the information regarding the relative posture between the plurality of IMU sensors and the information regarding the finger model and the accuracy of the three-dimensional position of the feature point of the predetermined finger estimated on the basis of the moving image of each camera.

Subsequently, the information processing apparatus 100A estimates the time-series information of the posture of the finger on the basis of the estimated three-dimensional position of the finger. More specifically, the information processing apparatus 100A estimates the time-series information of the three-dimensional feature amount of the finger as the time-series information of the posture of the finger. Subsequently, the information processing apparatus 100 stores the time-series information of the three-dimensional feature amount of the finger in the database.

### [2.6. Mounting Example of IMU Sensor]

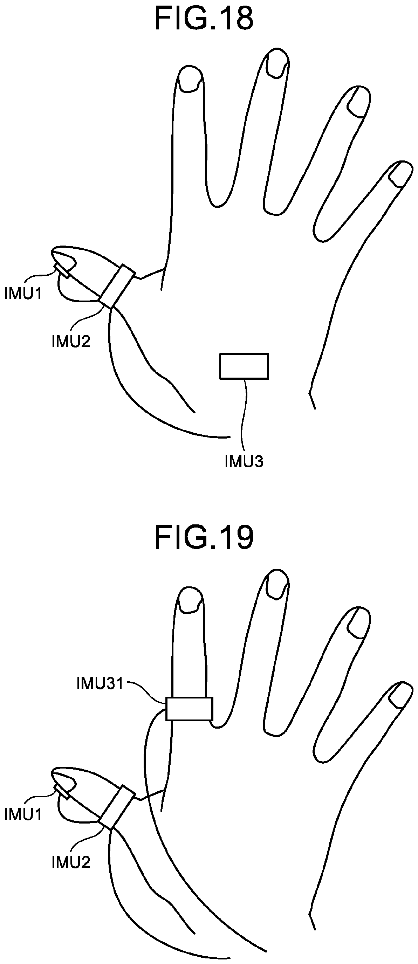

Next, mounting of the IMU sensor according to the second embodiment of the present disclosure will be described with reference to FIGS. 18 and 19. In FIGS. 18 and 19, a mounting example in a case where sensing data of the thumb is acquired by the IMU sensor according to the second embodiment will be described. For example, in a case where the thumb is sensed by the IMU sensor according to the second embodiment, the IMU sensors are attached to two nodes of the thumb and at least one other position.

First, will be described with reference to FIG. 18. FIG. 18 is a diagram illustrating a mounting example of the IMU sensor according to the second embodiment of the present disclosure. In the example illustrated in FIG. 18, a first IMU sensor (IMU1) is attached to a range from an IP joint of the thumb to a distal phalanx. For example, the first IMU sensor (IMU1) has a thin and small shape and can be affixed to a predetermined position of the thumb.

In addition, a second IMU sensor (IMU2) is attached to a range from an MP joint of the thumb to a proximal phalanx. For example, the second IMU sensor (IMU2) is ring-shaped and can be fitted into the thumb.

In addition, a third IMU sensor (IMU3) is attached around a lunate bone of the palm. Note that the attachment position of the third IMU sensor (IMU3) is not limited to around the lunate bone of the palm, and may be any position as long as it is anatomically difficult to move. For example, the third IMU sensor (IMU3) has a thin and small shape and can be affixed to a predetermined position of the palm.

Next, mounting of the IMU sensor according to the second embodiment of the present disclosure will be described with reference to FIG. 19. FIG. 19 is a diagram illustrating a mounting example of the IMU sensor according to the second embodiment of the present disclosure. In the example illustrated in FIG. 19, similarly to FIG. 18, the first IMU sensor (IMU1) is attached to a range from the IP joint of the thumb to the distal phalanx. In addition, a second IMU sensor (IMU2) is attached to a range from an MP joint of the thumb to a proximal phalanx.

FIG. 19 is different from FIG. 18 in that the third IMU sensor (IMU3) is attached to the index finger instead of around the lunate bone of the palm. In FIG. 19, the third IMU sensor (IMU3) is ring-shaped and can be fitted on an index finger.

### [3. Third Embodiment]

In the information processing system 2 according to the second embodiment described above, an example is described in which the posture estimation of the finger which is difficult to perform photographing by the camera installed in the environment is complemented by the sensing data detected by the plurality of IMU sensors installed on the thumb and the back of the hand of the user. However, in a case where a piano performance is photographed, fingers other than the thumb due to finger clasping or the like are often hidden.

For example, in a case where a performance of a piano is photographed, when the player moves the middle finger or the ring finger, the middle finger or the ring finger may be hidden by other fingers. Therefore, in an information processing system 3 according to a third embodiment, an example of complementing an estimation of a posture of a finger difficult to photograph by the camera installed in the environment on the basis of the image information photographed by a wearable camera attached to the wrist of the user and the sensing data detected by the IMU sensor mounted on the wearable camera will be described.

### [3.1. Configuration Example of Information Processing System]

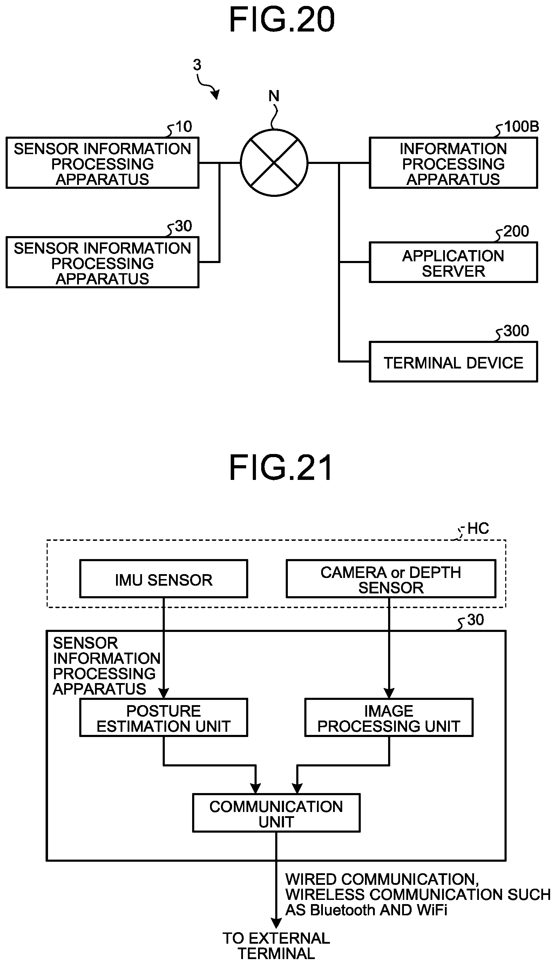

Next, a configuration of an information processing system according to the third embodiment of the present disclosure will be described with reference to FIG. 20. FIG. 20 is a diagram illustrating a configuration example of the information processing system according to the third embodiment of the present disclosure. As illustrated in FIG. 20, the information processing system 3 according to the third embodiment is different from the information processing system 1 according to the first embodiment in including a sensor information processing apparatus 30. Furthermore, the information processing system 3 according to the third embodiment is different in including an information processing apparatus 100B instead of the information processing apparatus 100 of the information processing system 1 according to the first embodiment. Therefore, in the following description, the sensor information processing apparatus 30 will be mainly described, and detailed description of other configurations included in the information processing system 3 according to the third embodiment will be omitted.

The various devices illustrated in FIG. 20 are communicably connected in a wired or wireless manner via a network N (for example, the Internet). Note that the information processing system 3 illustrated in FIG. 20 may include an arbitrary number of sensor information processing apparatuses 10, an arbitrary number of sensor information processing apparatuses 30, an arbitrary number of information processing apparatuses 100B, an arbitrary number of application servers 200, and an arbitrary number of terminal devices 300.

The sensor information processing apparatus 30 acquires image information photographed by the wearable camera attached to the wrist of the user from the wearable camera. The sensor information processing apparatus 30 estimates a two-dimensional position of a feature point of a finger included in the image on the basis of the image information acquired from the wearable camera. For example, the sensor information processing apparatus 30 estimates the two-dimensional position of the feature point of the finger, which is a position of a finger joint or a fingertip included in the image, on the basis of the image information acquired from the wearable camera. After estimating the two-dimensional position of the feature point of the finger, the sensor information processing apparatus 30 transmits information regarding the estimated two-dimensional position of the feature point of the finger to the information processing apparatus 100B.

In addition, the sensor information processing apparatus 30 acquires sensing data detected by an IMU sensor included in the wearable camera from the IMU sensor of the wearable camera. The sensor information processing apparatus 30 estimates the posture of the wearable camera on the basis of the sensing data acquired from the IMU sensor. Subsequently, the sensor information processing apparatus 30 estimates camera parameters of the wearable camera on the basis of the estimated posture of the wearable camera. When estimating the camera parameters of the wearable camera, the sensor information processing apparatus 30 transmits information regarding the estimated camera parameters of the wearable camera to the information processing apparatus 100B.

The information processing apparatus 100B acquires the information regarding the two-dimensional position of the feature point of the finger included in the image photographed by the wearable camera from the sensor information processing apparatus 30. Furthermore, the information processing apparatus 100B acquires information regarding camera parameters of the wearable camera from the sensor information processing apparatus 30. The information processing apparatus 100B estimates the posture of the finger that is difficult to photograph by the camera installed in the environment on the basis of the information regarding the two-dimensional position of the feature point of the finger included in the image photographed by the wearable camera and the information regarding the camera parameter of the wearable camera. Note that the sensor information processing apparatus 30 and the information processing apparatus 100B may be an integrated apparatus. In this case, the information processing apparatus 100B acquires the image information photographed by the wearable camera attached to the wrist of the user from the wearable camera. The information processing apparatus 100B estimates the two-dimensional position of the feature point of the finger included in the image on the basis of the image information acquired from the wearable camera. For example, the information processing apparatus 100B estimates the two-dimensional position of the feature point of the finger, which is the position of the finger joint or the fingertip included in the image, on the basis of the image information acquired from the wearable camera. In addition, the information processing apparatus 100B acquires sensing data detected by an IMU sensor included in the wearable camera from the IMU sensor of the wearable camera. The information processing apparatus 100B estimates the posture of the wearable camera on the basis of the sensing data acquired from the IMU sensor. Subsequently, the information processing apparatus 100B estimates camera parameters of the wearable camera on the basis of the estimated posture of the wearable camera.

### [3.2. Configuration Example of Sensor Information Processing Apparatus]

Next, a configuration of the sensor information processing apparatus according to the third embodiment of the present disclosure will be described with reference to FIG. 21. FIG. 21 is a diagram illustrating a configuration example of the sensor information processing apparatus according to the third embodiment of the present disclosure. In the example illustrated in FIG. 21, the sensor information processing apparatus 30 includes a posture estimation unit, an image processing unit, and a communication unit.

The posture estimation unit acquires sensing data detected by an IMU sensor included in the wearable camera from the IMU sensor of the wearable camera. The posture estimation unit estimates the posture of the wearable camera on the basis of the sensing data acquired from the IMU sensor. Subsequently, the posture estimation unit estimates the camera parameter of the wearable camera on the basis of the estimated posture of the wearable camera. When estimating the camera parameter of the wearable camera, the posture estimation unit outputs information regarding the estimated camera parameter of the wearable camera to the communication unit.

The image processing unit acquires the image information photographed by the wearable camera attached to the wrist of the user from the wearable camera. For example, the image processing unit may acquire image information photographed by a depth sensor from the wearable camera. The image processing unit estimates the two-dimensional position of the feature point of the finger included in the image on the basis of the image information acquired from the wearable camera. For example, the image processing unit estimates the two-dimensional position of the feature point of the finger included in the image by using a machine learning model learned to estimate the two-dimensional position of the feature point of the finger included in the image on the basis of the image information acquired from the wearable camera. After estimating the two-dimensional position of the feature point of the finger, the image processing unit outputs information regarding the estimated two-dimensional position of the feature point of the finger to the communication unit.

The communication unit communicates with the information processing apparatus 100B via the network N. Furthermore, the communication unit may wirelessly communicate with the information processing apparatus 100B using communication by Wi-Fi (registered trademark), ZigBee (registered trademark), Bluetooth (registered trademark), Bluetooth Low Energy (registered trademark), ANT (registered trademark), ANT+ (registered trademark), EnOcean Alliance (registered trademark), or the like.

The communication unit acquires information regarding the camera parameters of the wearable camera from the posture estimation unit. In addition, the communication unit acquires information regarding the two-dimensional position of the feature point of the finger included in the image photographed by the wearable camera from the image processing unit. When acquiring the information regarding the camera parameter and the information regarding the two-dimensional position of the feature point of the finger, the communication unit transmits the acquired information regarding the camera parameter and the acquired information regarding the two-dimensional position of the feature point of the finger to the information processing apparatus 100B.

### [3.3. Configuration Example of Information Processing Apparatus]

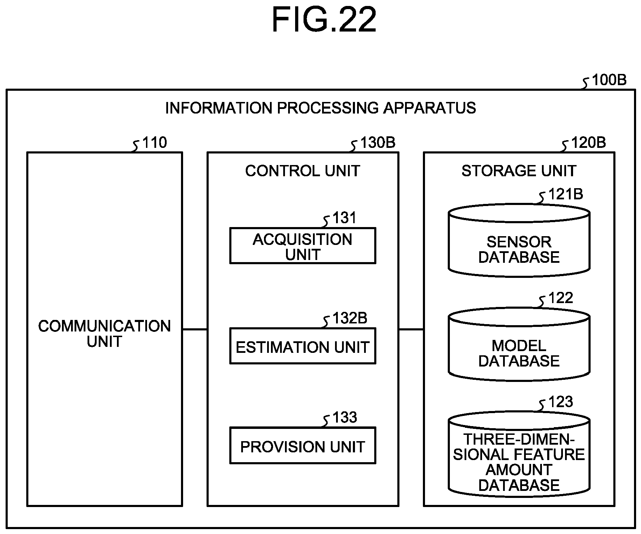

Next, a configuration of the information processing apparatus according to the third embodiment of the present disclosure will be described with reference to FIG. 22. FIG. 22 is a diagram illustrating a configuration example of the information processing apparatus according to the third embodiment of the present disclosure. As illustrated in FIG. 22, the information processing apparatus 100B according to the third embodiment is different from the information processing apparatus 100 according to the first embodiment in that an estimation unit 132B and a sensor database 121B are provided instead of the estimation unit 132 and the sensor database 121. Therefore, in the following description, the estimation unit 132B and the sensor database 121B will be mainly described, and detailed description of other configurations included in the information processing apparatus 100B according to the third embodiment will be omitted.

### (Sensor Database 121B)

The sensor database 121B is different from the sensor database 121 of the information processing apparatus 100 according to the first embodiment in that the sensor database 121B stores information regarding the camera parameters of the wearable camera acquired from the sensor information processing apparatus 30 and information regarding the two-dimensional position of the feature point of the finger included in the image photographed by the wearable camera. The sensor database 121A stores the information regarding the camera parameter acquired by the acquisition unit 131 and the information regarding the two-dimensional position of the feature point of the finger.

### (Estimation Unit 132B)

The estimation unit 132B estimates time-series information regarding the posture of the user's finger on the basis of image information photographed by the wearable camera attached to the wrist of the user. For example, the estimation unit 132B estimates information regarding the two-dimensional position of the feature point of the finger included in the image photographed by the wearable camera by using a machine learning model learned to estimate the two-dimensional position of the feature point of the finger included in the image photographed by the wearable camera on the basis of the image information photographed by the wearable camera.

Furthermore, the wearable camera further includes an IMU sensor, and the estimation unit 132B estimates time-series information regarding the posture of the finger on the basis of the sensing data detected by the IMU sensor. Specifically, the estimation unit 132B refers to the sensor database 121B to acquire the information regarding the camera parameters of the wearable camera and the information regarding the two-dimensional position of the feature point of the finger included in the image photographed by the wearable camera.

Note that the estimation unit 132B may acquire sensing data detected by the IMU sensor of the wearable camera from the wearable camera and estimate the posture of the wearable camera on the basis of the sensing data detected by the IMU sensor. Subsequently, the estimation unit 132B may estimate the camera parameters of the wearable camera on the basis of the estimated posture of the wearable camera.

The estimation unit 132B estimates the three-dimensional positions of the feature points of the finger joint, the palm, the back of the hand, and the wrist on the basis of the information regarding the camera parameters of the wearable camera, the information regarding the two-dimensional positions of the feature points of the fingers included in the image photographed by the wearable camera, and the estimated information regarding the two-dimensional positions of the feature points of the finger joint, the palm, the back of the hand, and the wrist included in the moving image of each camera.

For example, the estimation unit 132B calculates the three-dimensional position of the feature point of the finger in the combination of the respective cameras and certainty thereof on the basis of images stereoscopically viewed by any two cameras among the plurality of high-speed cameras and the wearable cameras installed in the environment. Subsequently, in a case where the feature point of the predetermined finger is determined not to be included in the moving image of each camera, the estimation unit 132B estimates the three-dimensional position of the feature point of the predetermined finger (the position of the finger joint or the position of the fingertip) by weighting and averaging the three-dimensional position of the feature point of the predetermined finger (the position of the finger joint or the position of the fingertip) in each combination with the calculated certainty.

Subsequently, the estimation unit 132B estimates the time-series information of the posture of the predetermined finger on the basis of the estimated three-dimensional position of the predetermined finger. More specifically, the estimation unit 132B estimates the time-series information of the three-dimensional feature amount of the predetermined finger as the time-series information of the posture of the predetermined finger.

### [3.4. Operation Example of Information Processing System]

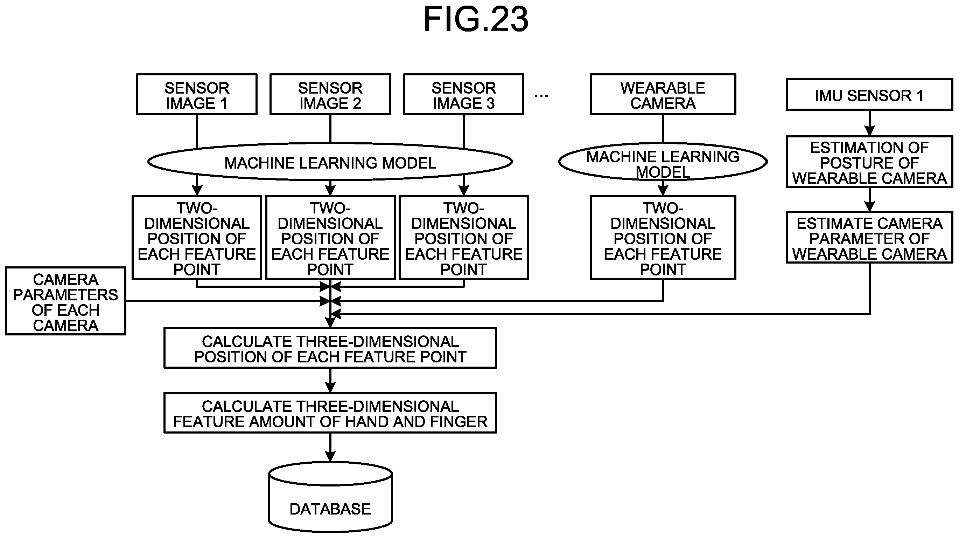

Next, an operation of the information processing system according to the third embodiment of the present disclosure will be described with reference to FIG. 23. FIG. 23 is a diagram for describing an operation example of the information processing system according to the third embodiment of the present disclosure. In the example illustrated in FIG. 23, similarly to FIG. 4, the information processing apparatus 100B acquires sensor images 1, 2, 3,... respectively photographed by a plurality of high-speed cameras installed in the environment. Subsequently, the information processing apparatus 100B inputs the acquired sensor images 1, 2, 3,... to a machine learning model M1. The information processing apparatus 100B estimates, as output information of the machine learning model M1, each of two-dimensional positions of feature points of the finger joint, the palm, the back of the hand, and the wrist included in each of the sensor images 1, 2, 3,.... Furthermore, the information processing apparatus 100B acquires the camera parameter of each of the plurality of high-speed cameras.

In addition, in FIG. 23, the information processing apparatus 100B acquires the image information photographed by the wearable camera attached to the wrist of the user. Subsequently, the information processing apparatus 100B estimates information regarding the two-dimensional position of the feature point of the finger included in the image photographed by the wearable camera by using a machine learning model learned to estimate the two-dimensional position of the feature point of the finger included in the image photographed by the wearable camera on the basis of the image information photographed by the wearable camera.

In addition, the information processing apparatus 100B acquires sensing data detected by the IMU sensor of the wearable camera from the wearable camera. Subsequently, the information processing apparatus 100B estimates the posture of (the IMU sensor of) the wearable camera on the basis of the acquired sensing data. Subsequently, the information processing apparatus 100B estimates the camera parameter of the wearable camera on the basis of the estimated posture of (the IMU sensor of) the wearable camera.

Subsequently, the information processing apparatus 100B estimates the three-dimensional positions of the feature points of the finger joint, the palm, the back of the hand, and the wrist on the basis of the information regarding the camera parameter of the wearable camera, the information regarding the two-dimensional positions of the feature points of the fingers included in the image photographed by the wearable camera, and the estimated information regarding the two-dimensional positions of the feature points of the finger joint, the palm, the back of the hand, and the wrist included in the moving image of each camera.

For example, similarly to FIG. 4, the information processing apparatus 100B estimates the three-dimensional positions of the feature points of the finger joint, the palm, the back of the hand, and the wrist on the basis of the information regarding the two-dimensional positions of the feature points of the finger joint, the palm, the back of the hand, and the wrist included in the estimated moving image of each camera. Furthermore, the information processing apparatus 100B calculates the three-dimensional position of the feature point of the finger in the combination of the respective cameras and the certainty thereof on the basis of images stereoscopically viewed by any two cameras among the plurality of high-speed cameras and wearable cameras installed in the environment. Subsequently, in a case where it is determined that the feature point of the predetermined finger (for example, a finger such as a middle finger or a ring finger hidden by another finger) is not included in the moving image of each camera, the information processing apparatus 100B estimates the three-dimensional position of the feature point of the predetermined finger (the position of the joint of the finger or the position of the fingertip) by weighting and averaging the three-dimensional position of the feature point of the predetermined finger (the position of the joint of the finger or the position of the fingertip) in each combination with the calculated certainty.

Subsequently, the information processing apparatus 100B estimates the time-series information of the posture of the finger on the basis of the estimated three-dimensional position of the finger. More specifically, the information processing apparatus 100B estimates the time-series information of the three-dimensional feature amount of the finger as the time-series information of the posture of the finger. Subsequently, the information processing apparatus 100B stores the time-series information of the three-dimensional feature amount of the finger in the database.

### [3.5. Outline of Sensing by Wearable Camera]

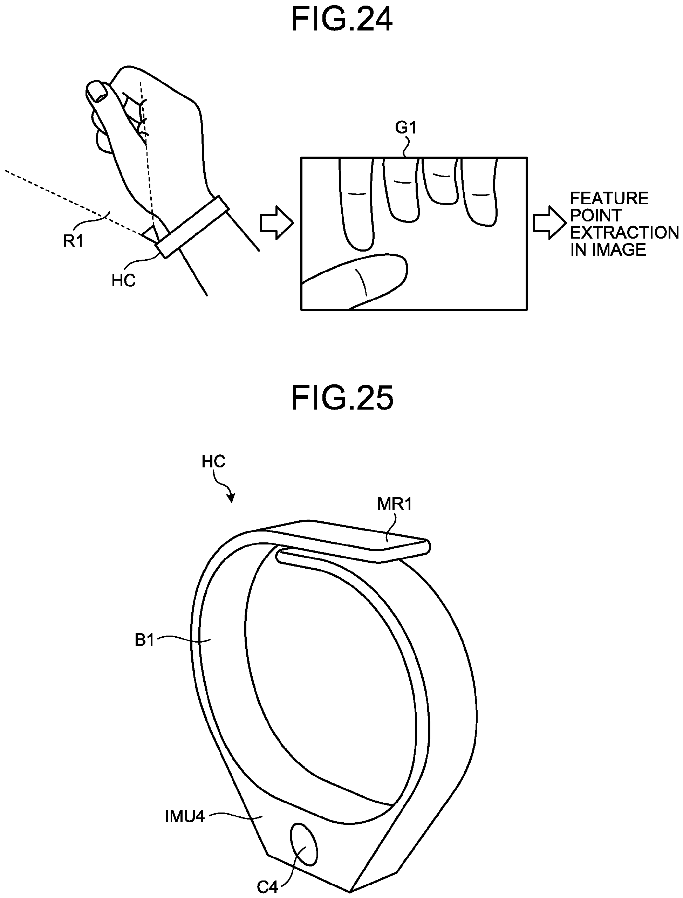

Next, an outline of sensing by the wearable camera according to the third embodiment of the present disclosure will be described with reference to FIG. 24. FIG. 24 is a diagram for describing the outline of the sensing by the wearable camera according to the third embodiment of the present disclosure.

As illustrated on the left side of FIG. 24, a wearable camera HC is attached to the wrist of a user and photographs the palm side of the user. The wearable camera HC photographs an image of a range of R1 illustrated on the left side of FIG. 24. For example, the range of R1 indicates a range extending in a conical shape from the camera position of the wearable camera HC toward the palm side of the user.

When the range of R1 is photographed by the wearable camera HC, an image G1 as illustrated in the center of FIG. 24 is obtained. For example, the image G1 includes a DIP joint and a fingertip of a finger close to the user's fingertip. The sensor information processing apparatus 30 extracts the positions of the finger joints and fingertips included in the image as the feature points of the fingers on the basis of the image information acquired from the wearable camera HC.

In addition, the wearable camera HC photographs the palm side of the user with a normal camera or a depth sensor. An infrared light source may be attached around the camera of the wearable camera HC. The camera may be replaced with a TOF (Time-of-Flight) sensor. In addition, the posture of the wearable camera HC itself is estimated by sensing data of an IMU sensor attached to the same place as the camera.

As described above, the wearable camera HC can complement the information of the finger that cannot be photographed by the camera attached to the environment by photographing the palm side. In addition, by photographing the palm side with the wearable camera HC, the fingertip can be tracked without being hidden by other fingers.

### [3.6. Structure of Wearable Camera]

Next, a structure of the wearable camera according to the third embodiment of the present disclosure will be described with reference to FIG. 25. FIG. 25 is a diagram for describing the structure of the wearable camera according to the third embodiment of the present disclosure.

As illustrated in FIG. 25, the wearable camera HC includes a camera C4 that is a normal camera or a depth sensor. Note that, since the wearable camera HC is attached to the wrist and the palm is photographed, the position of the camera C4 needs to protrude from the band.

The wearable camera HC includes an IMU sensor (IMU4). The IMU sensor (IMU4) is attached inside a main body of the wearable camera HC.

In addition, the wearable camera HC includes a band B1 for fixing to the wrist.

In addition, the wearable camera HC may include a marker MR1 for tracking from an external sensor around the band.

### [3.7. Modification]

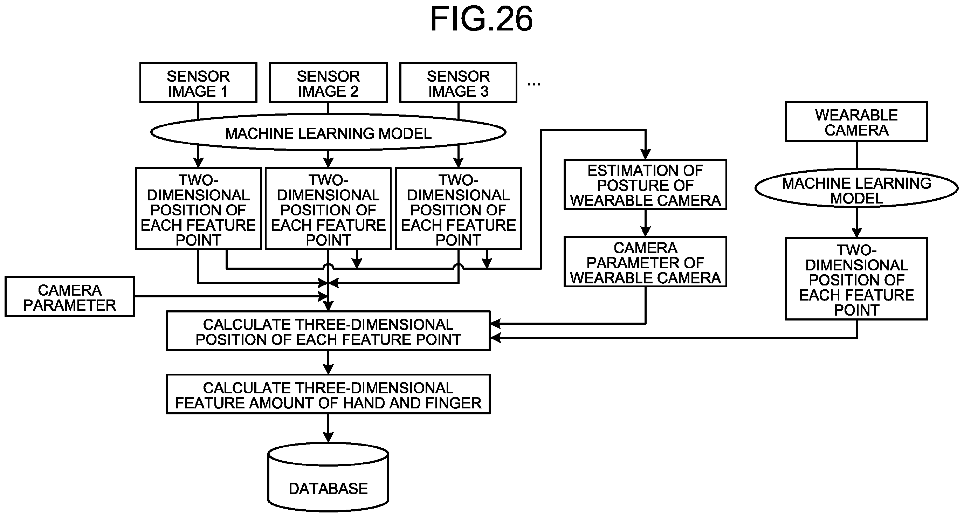

Next, an operation of an information processing system according to a modification of the third embodiment of the present disclosure will be described with reference to FIG. 26. FIG. 26 is a diagram for describing an operation example of the information processing system according to the modification of the third embodiment of the present disclosure. In FIG. 26, an example in which the information processing system 3 estimates the time-series information regarding the posture of the finger on the basis of the image information of the wearable camera and the image information of the high-speed camera installed in the environment without using the sensing data by the IMU sensor of the wearable camera will be described.

In the example illustrated in FIG. 26, similarly to FIG. 23, the information processing apparatus 100B acquires sensor images 1, 2, 3,... respectively photographed by a plurality of high-speed cameras installed in the environment. Subsequently, the information processing apparatus 100B inputs the acquired sensor images 1, 2, 3,... to a machine learning model M1. The information processing apparatus 100B estimates, as output information of the machine learning model M1, each of two-dimensional positions of feature points of the finger joint, the palm, the back of the hand, and the wrist included in each of the sensor images 1, 2, 3,.... Furthermore, the information processing apparatus 100B acquires the camera parameter of each of the plurality of high-speed cameras.

Furthermore, the information processing apparatus 100B estimates the posture of the wearable camera on the basis of the acquired sensor images 1, 2, 3,.... Subsequently, the information processing apparatus 100B estimates camera parameters of the wearable camera on the basis of the estimated posture of the wearable camera.

Subsequently, the information processing apparatus 100B estimates the three-dimensional positions of the feature points of the finger joint, the palm, the back of the hand, and the wrist on the basis of the information regarding the camera parameter of the wearable camera, the information regarding the two-dimensional positions of the feature points of the fingers included in the image photographed by the wearable camera, and the estimated information regarding the two-dimensional positions of the feature points of the finger joint, the palm, the back of the hand, and the wrist included in the moving image of each camera.

### [4. Fourth Embodiment]

In an information processing system 4 according to a fourth embodiment, a contact sensor that detects contact with an object is mounted inside the object. Then, an information processing apparatus 100C of the information processing system 4 according to the fourth embodiment estimates time-series information of a posture of a finger in contact with the object on the basis of the sensing data regarding the contact of the finger with respect to the object.

### [4.1. Configuration Example of Information Processing System]

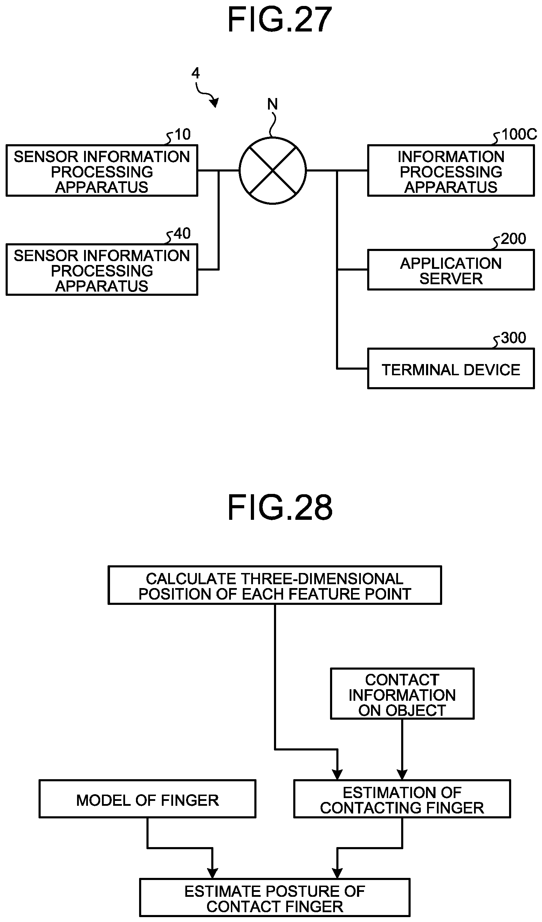

Next, a configuration of the information processing system according to the fourth embodiment of the present disclosure will be described with reference to FIG. 27. FIG. 27 is a diagram illustrating a configuration example of the information processing system according to the fourth embodiment of the present disclosure. As illustrated in FIG. 27, the information processing system 4 according to the fourth embodiment is different from the information processing system 1 according to the first embodiment in including a sensor information processing apparatus 40. Furthermore, the information processing system 4 according to the fourth embodiment is different in including the information processing apparatus 100C instead of the information processing apparatus 100 of the information processing system 1 according to the first embodiment. Therefore, in the following description, the sensor information processing apparatus 40 will be mainly described, and detailed description of other configurations included in the information processing system 4 according to the fourth embodiment will be omitted.

The sensor information processing apparatus 40 acquires sensing data regarding the contact of the finger with respect to the object from the contact sensor mounted inside the object. When acquiring the sensing data regarding the contact of the finger with respect to the object, the sensor information processing apparatus 40 transmits the sensing data to the information processing apparatus 100C.

The information processing apparatus 100C acquires, from the sensor information processing apparatus 40, sensing data regarding the contact of the finger with respect to the object. The information processing apparatus 100C estimates the time-series information of the posture of the finger in contact with the object on the basis of the sensing data. Note that the sensor information processing apparatus 40 and the information processing apparatus 100C may be an integrated apparatus. In this case, the information processing apparatus 100C acquires sensing data regarding the contact of the finger with respect to the object from the contact sensor mounted inside the object.

### [4.2. Operation Example of Information Processing System]

Next, an operation of the information processing system according to the fourth embodiment of the present disclosure will be described with reference to FIG. 28. FIG. 28 is a diagram for describing an operation example of the information processing system according to the fourth embodiment of the present disclosure. In the example illustrated in FIG. 28, similarly to the information processing apparatuses according to the first to third embodiments, the information processing apparatus 100C estimates three-dimensional positions of feature points of a finger joint, a palm, a back of a hand, and a wrist on the basis of information regarding two-dimensional positions of the feature points of the finger joint, the palm, the back of the hand, and the wrist included in the moving image of each camera.

Furthermore, the information processing apparatus 100C acquires the contact information of the finger on the object from the sensor information processing apparatus 40. Subsequently, the information processing apparatus 100C estimates the finger that has come into contact with the object on the basis of the three-dimensional positions of the feature points of the finger joint, the palm, the back of the hand, and the wrist and the contact information of the finger with the object. In addition, the information processing apparatus 100C acquires a model of the finger for specifying the finger in contact with the object. Subsequently, the information processing apparatus 100C estimates the posture of the finger in contact with the object on the basis of the estimated finger in contact with the object and the acquired model of the finger.

### [4.3. Configuration Example of Information Processing Apparatus]

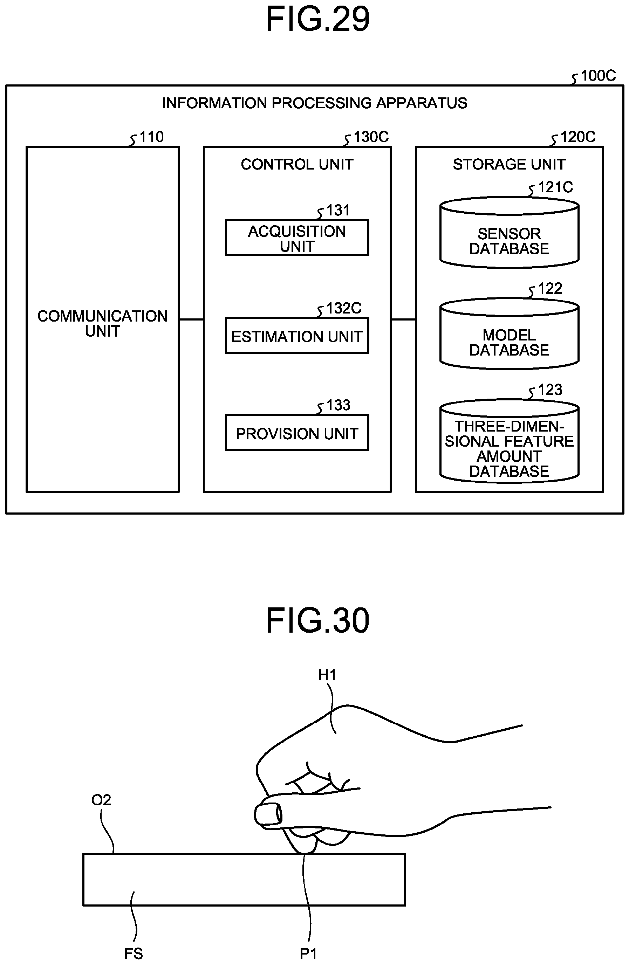

Next, a configuration of the information processing apparatus according to the fourth embodiment of the present disclosure will be described with reference to FIG. 29. FIG. 29 is a diagram illustrating a configuration example of the information processing apparatus according to the fourth embodiment of the present disclosure. As illustrated in FIG. 29, the information processing apparatus 100C according to the fourth embodiment is different from the information processing apparatus 100 according to the first embodiment in that an estimation unit 132C and a sensor database 121C are provided instead of the estimation unit 132 and the sensor database 121. Therefore, in the following description, the estimation unit 132C and the sensor database 121C will be mainly described, and detailed description of other configurations included in the information processing apparatus 100C according to the fourth embodiment will be omitted.

### (Sensor Database 121C)

The sensor database 121C is different from the sensor database 121 of the information processing apparatus 100 according to the first embodiment in that sensing data regarding contact of a finger with respect to the object acquired from the sensor information processing apparatus 40 is stored. The sensor database 121C stores the sensing data regarding the contact of the finger with respect to the object acquired by the acquisition unit 131.

### (Estimation Unit 132C)

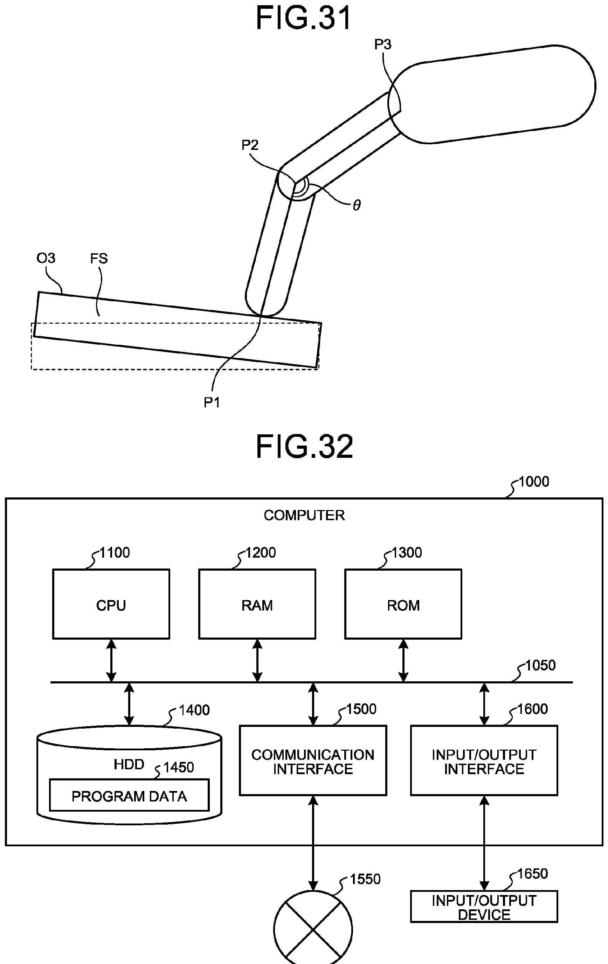

The estimation unit 132C estimates the time-series information regarding the posture of the finger in contact with the object on the basis of the sensing data detected by the contact sensor that detects the contact operation of the finger with respect to the object. Specifically, the estimation unit 132C acquires the contact information of the finger on the object from the sensor information processing apparatus 40. Subsequently, the estimation unit 132C estimates the finger that has come into contact with the object on the basis of the three-dimensional positions of the feature points of the finger joint, the palm, the back of the hand, and the wrist and the contact information of the finger with respect to the object. In addition, the estimation unit 132C acquires a model of the finger for specifying the finger in contact with an object. Subsequently, the estimation unit 132C estimates information regarding the posture of the finger in contact with the object on the basis of the estimated finger in contact with the object and the acquired model of the finger. For example, the estimation unit 132C estimates a joint angle of the finger in contact with the object as the information regarding the posture of the finger in contact with the object. Note that estimation processing of the joint angle of the finger by the estimation unit 132C will be described in detail with reference to FIG. 31 described later.

### [4.4. Contact Operation of Finger with Respect to Object]

Next, a contact operation of the finger with respect to the object according to the fourth embodiment of the present disclosure will be described with reference to FIG. 30. FIG. 30 is a diagram for describing the contact operation of the finger with respect to the object according to the fourth embodiment of the present disclosure. In the example illustrated in FIG. 30, an object O2 is, for example, a keyboard of a piano. A contact sensor FS that detects contact with the object is mounted inside the object O2. In FIG. 30, when an index finger of a player's hand H1 comes into contact with the object O2 at a point P1 on an upper surface of the object O2, the contact sensor FS detects the contact of the index finger with respect to the object O2. When detecting the contact of the index finger with respect to the object O2, the contact sensor FS transmits contact information between the object O2 and the index finger to the sensor information processing apparatus 40.

### [4.5. Process for Estimating Joint Angle of Finger]

Next, the estimation processing of the joint angle of the finger according to the fourth embodiment of the present disclosure will be described with reference to FIG. 31. FIG. 31 is a diagram for describing the estimation processing of the joint angle of the finger according to the fourth embodiment of the present disclosure. The example illustrated in FIG. 31 illustrates a case where the user's finger presses a point P1 on an upper surface of an object O3. For example, when the user's finger presses the point P1 located at one end of the keyboard, the end of the keyboard close to the pressing position P1 is lowered, and the end of the keyboard far from the pressing position P1 is lifted, and thus, the position of the object O3, which is the keyboard, changes. In FIG. 31, the position of the object O3 before the contact operation of the finger with respect to the object O3 is performed is indicated by a dotted line. In addition, the position of the object O3 in a state where the contact operation of the finger with respect to the object O3 is performed is indicated by a solid line.

The estimation unit 132 estimates the time-series information regarding the posture of the finger in contact with the object on the basis of the position information of the object before the contact operation of the finger with respect to the object is performed, the change amount of the position of the object before and after the contact operation of the finger with respect to the object is performed, and the contact position information of the finger with respect to the object. In FIG. 31, the estimation unit 132 estimates the time-series information regarding the posture of the finger in contact with the object on the basis of the position information (the position information of the dotted line) of the object before the contact operation of the finger with respect to the object O3 is performed, the change amount of the position of the object before and after the contact operation of the finger with respect to the object O3 is performed (the change amount of the position between the dotted line and the solid line), and the information of the contact position P1 of the finger with respect to the object O3.

More specifically, the estimation unit 132 estimates the angle of the PIP joint of the finger on the basis of the distance between the MP joint and the PIP joint of the finger, the distance between the PIP joint and the fingertip of the finger, the position of the MP joint of the finger, and the position of the fingertip of the finger as the time-series information regarding the posture of the finger in contact with the object. In FIG. 31, the estimation unit 132 estimates an angle θ of the PIP joint of the finger based on a distance L1 between a position P3 of the MP joint of the finger and a position P2 of the PIP joint, a distance L2 between the position P2 of the PIP joint of the finger and the position P1 of the fingertip, a position P3 of the MP joint of the finger, and the position P1 of the fingertip of the finger. For example, the estimation unit 132 estimates the position P3 of the MP joint of the finger, the position P2 of the PIP joint, and the position P1 of the fingertip included in the image information on the basis of the image information of the high-speed camera installed in the environment. Subsequently, the estimation unit 132 calculates the distance L1 between the position P3 of the MP joint of the finger and the position P2 of the PIP joint, and the distance L2 between the position P2 of the PIP joint of the finger and the position P1 of the fingertip. Subsequently, the estimation unit 132 estimates the angle θ of the PIP joint of the finger using the cosine theorem on the basis of the calculated distances L1 and L2, the estimated position P3 of the MP joint, and the estimated position P1 of the fingertip. Note that the DIP joint of the finger moves in synchronization with the PIP joint of the finger, and thus is omitted in calculation.

### [5. Effects]

As described above, the information processing apparatus 100 according to the embodiment of the present disclosure or the modification thereof includes the estimation unit 132. The estimation unit 132 estimates the time-series information regarding the posture of the finger on the basis of the image information including the operation of the finger with respect to the object including the contact operation of the finger with respect to the object and the object. Furthermore, the estimation unit 132 estimates the time-series information regarding the posture of the finger by using the first machine learning model learned to estimate the time-series information regarding the posture of the finger on the basis of the image information including the operation of the finger and the object.

As a result, the information processing apparatus 100 can estimate the posture of the finger without mounting a sensor or a marker on the finger joint or the like. That is, the information processing apparatus 100 can estimate the posture of the finger without hindering the operation of the finger by mounting a sensor, a marker, or the like. Therefore, the information processing apparatus 100 can appropriately estimate the posture of the finger during the operation of the finger with respect to the object including the contact operation of the finger with respect to the object, such as the finger during the performance of the piano.

Furthermore, the estimation unit 132 estimates, as the time-series information regarding the posture of the finger, time-series information of the position, speed, acceleration, or trajectory of the feature point of each joint of the finger or each fingertip, palm, back of hand, or wrist, or the angle, angular velocity, or angular acceleration of each joint of the finger.

As a result, the information processing apparatus 100 can appropriately estimate not only the three-dimensional position of the finger but also the angle of the finger joint, so that the posture of the finger can be more appropriately estimated.

The image information is image information photographed by the high-speed monochrome camera or the high-speed infrared camera.

As a result, even in a case where the shutter speed is increased in order to photograph the high-speed operation of the finger, the information processing apparatus 100 can secure a sufficient amount of light without causing the user who is performing the operation of the finger to feel glare, and thus, can appropriately estimate the posture of the finger.

In addition, the image information is a plurality of pieces of image information acquired by each of a plurality of cameras installed so as to photograph the object from a plurality of different directions.

As a result, in a case where photographing is performed from one direction, the information processing apparatus 100 can cover a finger hidden by another finger or the like by photographing from another direction, and thus, it is possible to more appropriately estimate the posture of the finger.

In addition, the plurality of cameras is attached to a gate-shaped structure surrounding the object, and each of the plurality of pieces of image information is a plurality of pieces of image information photographed in a state where the finger is illuminated by a light source installed in the vicinity of each camera.

As a result, even in a case where the high-speed operation of the finger is photographed, the information processing apparatus 100 can photograph the image with a sufficient light amount secured, and thus, can more appropriately estimate the posture of the finger.

The image information is a plurality of pieces of image information photographed by three or more cameras installed on both sides of the object and above the object.

As a result, in a case where photographing is performed from one direction, the information processing apparatus 100 can cover a finger hidden by another finger or the like by photographing from another direction, and thus, it is possible to more appropriately estimate the posture of the finger.

In addition, the image information is image information photographed with a range from the fingertip of the finger to the wrist as a photographing range.

As a result, the information processing apparatus 100 can improve the resolution and accuracy of the posture estimation of the finger by narrowing the photographing range, so that the posture of the finger can be more appropriately estimated.

Furthermore, the estimation unit 132 estimates the time-series information regarding the posture of the finger on the basis of the image information of the back of the hand performing the operation of the finger. Furthermore, the estimation unit 132 estimates the time-series information regarding the posture of the finger by using the second machine learning model learned to estimate the time-series information regarding the posture of the finger on the basis of the image information of the back of the hand performing the operation of the finger.

As a result, the information processing apparatus 100 can more appropriately estimate the posture of the finger on the basis of the image of the back of the hand that is easier to photograph as compared with the finger during high-speed operation.

In addition, the estimation unit 132 estimates time-series information regarding the posture of the user's finger on the basis of sensing data detected by the plurality of IMU sensors installed on the thumb and the back of the hand of the user.

As a result, the information processing apparatus 100 can complement posture estimation of a finger hidden by another finger or the like.

In addition, the estimation unit 132 estimates the time-series information regarding the posture of the fingers of the user on the basis of the image information photographed by the wearable camera attached to the wrist of the user.

As a result, the information processing apparatus 100 can complement posture estimation of a finger hidden by another finger or the like.

Furthermore, the wearable camera further includes an IMU sensor, and the estimation unit 132 estimates time-series information regarding the posture of the finger on the basis of the sensing data detected by the IMU sensor.

As a result, the information processing apparatus 100 can more accurately complement the posture estimation of the finger hidden by other fingers or the like.

Furthermore, the estimation unit 132 estimates time-series information regarding the posture of the finger in contact with the object on the basis of sensing data detected by the contact sensor that detects the contact operation of the finger with respect to the object. Furthermore, the estimation unit 132 estimates the time-series information regarding the posture of the finger in contact with the object on the basis of the position information of the object before the contact operation of the finger with respect to the object is performed, the change amount of the position of the object before and after the contact operation of the finger with respect to the object is performed, and the contact position information of the finger with respect to the object. Furthermore, the estimation unit 132 estimates the angle of the PIP joint of the finger on the basis of the distance between the MP joint and the PIP joint of the finger, the distance between the PIP joint and the fingertip of the finger, the position of the MP joint of the finger, and the position of the fingertip of the finger as the time-series information regarding the posture of the finger in contact with the object.

As a result, the information processing apparatus 100 can complement posture estimation of a finger hidden by another finger or the like.

In addition, the object is the keyboard, and the operation of the finger with respect to the object is a key hitting operation of the finger with respect to the keyboard or a moving operation of moving the position of the finger with respect to the keyboard.

As a result, the information processing apparatus 100 can appropriately estimate the posture of the finger during performance of the piano.

Furthermore, the information processing apparatus 100 further includes the provision unit 133. The provision unit 133 provides the user with time-series information regarding the posture of the finger estimated by the estimation unit 132.

As a result, the information processing apparatus 100 can transmit the fine operation of the fingers to another person (such as a student) and support the proficiency of the other person.

### [6. Hardware Configuration]

The information device such as the information processing apparatus 100 according to the above-described embodiment and modification is realized by a computer 1000 having a configuration as illustrated in FIG. 29, for example. FIG. 29 is a hardware configuration diagram illustrating an example of the computer 1000 that implements the functions of the information processing apparatus such as the information processing apparatus 100. Hereinafter, the information processing apparatus 100 according to the above-described embodiment or the modification thereof will be described as an example. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of a program stored in the ROM 1300 or the HDD 1400, and controls each unit. For example, the CPU 1100 develops a program stored in the ROM 1300 or the HDD 1400 in the RAM 1200, and executes processing corresponding to various programs.

The ROM 1300 stores a boot program such as a basic input output system (BIOS) executed by the CPU 1100 when the computer 1000 is activated, a program depending on hardware of the computer 1000, and the like.

The HDD 1400 is a computer-readable recording medium that non-transiently records a program executed by the CPU 1100, data used by the program, and the like. Specifically, the HDD 1400 is a recording medium that records an information processing program according to an embodiment of the present disclosure or a modification thereof as an example of program data 1350.

The communication interface 1500 is an interface for the computer 1000 to connect to an external network 1550 (for example, the Internet). For example, the CPU 1100 receives data from another device or transmits data generated by the CPU 1100 to another device via the communication interface 1500.

The input/output interface 1600 is an interface for connecting an input/output device 1650 and the computer 1000. For example, the CPU 1100 receives data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface that reads a program or the like recorded in a predetermined recording medium (medium). The medium is, for example, an optical recording medium such as a digital versatile disc (DVD) or a phase change rewritable disk (PD), a magneto-optical recording medium such as a magneto-optical disk (MO), a tape medium, a magnetic recording medium, a semiconductor memory, or the like.

For example, in a case where the computer 1000 functions as the information processing apparatus 100 according to the above-described embodiment or the modification thereof, the CPU 1100 of the computer 1000 implements the functions of the control unit 130 and the like by executing the information processing program loaded on the RAM 1200. Furthermore, the HDD 1400 stores an information processing program according to an embodiment of the present disclosure or a modification thereof, and data in the storage unit 120. Note that the CPU 1100 reads the program data 1350 from the HDD 1400 and executes the program data 1350, but as another example, these programs may be acquired from another device via the external network 1550.

Note that the present technology can also have the following configurations.
(1) An information processing apparatus comprising: an estimation unit that estimates time-series information regarding a posture of a finger on the basis of image information including an operation of the finger with respect to an object including a contact operation of the finger with respect to the object and the object.
(2) The information processing apparatus according to (1),
   wherein the estimation unit estimates the time-series information regarding the posture of the finger by using a first machine learning model learned to estimate the time-series information regarding the posture of the finger on the basis of the image information including the operation of the finger and the object.
(3) The information processing apparatus according to (1) or (2),
   wherein the estimation unit estimates, as the time-series information regarding the posture of the finger, time-series information of a position, a speed, an acceleration, or a trajectory of a feature point of each joint of the finger or each fingertip, palm, back of hand, or wrist, or an angle, an angular velocity, or an angular acceleration of each joint of the finger.
(4) The information processing apparatus according to any of (1) to (3),
   wherein the image information is image information photographed by a high-speed monochrome camera or a high-speed infrared camera.
(5) The information processing apparatus according to any of (1) to (4),
   wherein the image information is a plurality of pieces of image information acquired by a plurality of cameras installed so as to photograph the object from a plurality of different directions.
(6) The information processing apparatus according to (5),
   wherein the plurality of cameras is attached to a gate-shaped structure surrounding the object, and
   each of the plurality of pieces of image information is the plurality of pieces of image information photographed in a state where the finger is illuminated by a light source installed in the vicinity of each of the cameras.
(7) The information processing apparatus according to any of (1) to (6),
   wherein the image information is a plurality of pieces of image information photographed by three or more cameras installed on both sides of the object and above the object.
(8) The information processing apparatus according to any of (1) to (7),
   wherein the image information is image information photographed with a range from a fingertip of the finger to a wrist as a photographing range.
(9) The information processing apparatus according to any of (1) to (8),
   wherein the estimation unit estimates the time-series information regarding the posture of the finger on the basis of image information of a back of a hand performing an operation of the finger.
(10) The information processing apparatus according to (9),
   wherein the estimation unit estimates the time-series information regarding the posture of the finger by using a second machine learning model learned to estimate the time-series information regarding the posture of the finger on the basis of the image information of the back of the hand performing the operation of the finger.
(11) The information processing apparatus according to any of (1) to (10),
   wherein the estimation unit estimates the time-series information regarding the posture of the finger of a user on the basis of sensing data detected by a plurality of IMU sensors installed on a thumb and a back of a hand of the user.
(12) The information processing apparatus according to any of (1) to (11),
   wherein the estimation unit estimates the time-series information regarding the posture of the finger of a user on the basis of the image information photographed by a wearable camera attached to a wrist of the user.
(13) The information processing apparatus according to (12),
   wherein the wearable camera further includes an IMU sensor, and
   the estimation unit estimates the time-series information regarding the posture of the finger based on sensing data detected by the IMU sensor.
(14) The information processing apparatus according to any of (1) to (13),
   wherein the estimation unit estimates the time-series information regarding the posture of the finger in contact with the object on the basis of sensing data detected by a contact sensor that detects a contact operation of the finger with respect to the object.
(15) The information processing apparatus according to (14),
   wherein the estimation unit estimates the time-series information regarding the posture of the finger in contact with the object on the basis of position information of the object before the contact operation of the finger with respect to the object is performed, a change amount of a position of the object before and after the contact operation of the finger with respect to the object is performed, and contact position information of the finger with respect to the object.
(16) The information processing apparatus according to (14) or (15),
   wherein the estimation unit estimates an angle of a PIP joint of the finger on the basis of a distance between an MP joint and the PIP joint of the finger, a distance between the PIP joint and a fingertip of the finger, a position of the MP joint of the finger, and a position of the fingertip of the finger as the time-series information regarding the posture of the finger in contact with the object.
(17) The information processing apparatus according to any of (1) to (16),
   wherein the object is a keyboard, and
   the operation of the finger with respect to the object is a key hitting operation of the finger with respect to the keyboard or a moving operation of moving a position of the finger with respect to the keyboard.
(18) The information processing apparatus according to any of (1) to (17), further comprising
   a provision unit configured to provide the time-series information regarding the posture of the finger estimated by the estimation unit to a user.
(19) An information processing method comprising:
   allowing a computer to estimate time-series information regarding a posture of a finger on the basis of image information including an operation of the finger with respect to an object including a contact operation of the finger with respect to the object and the object.
(20) A program for causing a computer to function as an estimation unit that estimates time-series information regarding a posture of a finger on the basis of image information including an operation of the finger with respect to an object including a contact operation of the finger with respect to the object and the object.

### Reference Signs List

- 1: INFORMATION PROCESSING SYSTEM

- 10: SENSOR INFORMATION PROCESSING APPARATUS
- 100: INFORMATION PROCESSING APPARATUS
- 110: COMMUNICATION UNIT
- 120: STORAGE UNIT
- 121: SENSOR DATABASE
- 122: MODEL DATABASE
- 123: THREE-DIMENSIONAL FEATURE AMOUNT DATABASE
- 130: CONTROL UNIT
- 131: ACQUISITION UNIT
- 132: ESTIMATION UNIT
- 133: PROVISION UNIT
- 200: APPLICATION SERVER
- 300: TERMINAL DEVICE

## Claims

1. An information processing apparatus comprising:
an estimation unit that estimates time-series information regarding a posture of a finger on the basis of image information including an operation of the finger with respect to an object including a contact operation of the finger with respect to the object and the object.

2. The information processing apparatus according to claim 1,
wherein the estimation unit estimates the time-series information regarding the posture of the finger by using a first machine learning model learned to estimate the time-series information regarding the posture of the finger on the basis of the image information including the operation of the finger and the object.

3. The information processing apparatus according to claim 1,
wherein the estimation unit estimates, as the time-series information regarding the posture of the finger, time-series information of a position, a speed, an acceleration, or a trajectory of a feature point of each joint of the finger or each fingertip, palm, back of hand, or wrist, or an angle, an angular velocity, or an angular acceleration of each joint of the finger.

4. The information processing apparatus according to claim 1,
wherein the image information is image information photographed by a high-speed monochrome camera or a high-speed infrared camera.

5. The information processing apparatus according to claim 1,
wherein the image information is a plurality of pieces of image information acquired by a plurality of cameras installed so as to photograph the object from a plurality of different directions.

6. The information processing apparatus according to claim 5,
wherein the plurality of cameras is attached to a gate-shaped structure surrounding the object, and
each of the plurality of pieces of image information is the plurality of pieces of image information photographed in a state where the finger is illuminated by a light source installed in the vicinity of each of the cameras.

7. The information processing apparatus according to claim 1,
wherein the image information is a plurality of pieces of image information photographed by three or more cameras installed on both sides of the object and above the object.

8. The information processing apparatus according to claim 1,
wherein the image information is image information photographed with a range from a fingertip of the finger to a wrist as a photographing range.

9. The information processing apparatus according to claim 1,
wherein the estimation unit estimates the time-series information regarding the posture of the finger on the basis of image information of a back of a hand performing an operation of the finger.

10. The information processing apparatus according to claim 9,
wherein the estimation unit estimates the time-series information regarding the posture of the finger by using a second machine learning model learned to estimate the time-series information regarding the posture of the finger on the basis of the image information of the back of the hand performing the operation of the finger.

11. The information processing apparatus according to claim 1,
wherein the estimation unit estimates the time-series information regarding the posture of the finger of a user on the basis of sensing data detected by a plurality of IMU sensors installed on a thumb and a back of a hand of the user.

12. The information processing apparatus according to claim 1,
wherein the estimation unit estimates the time-series information regarding the posture of the finger of a user on the basis of the image information photographed by a wearable camera attached to a wrist of the user.

13. The information processing apparatus according to claim 12,
wherein the wearable camera further includes an IMU sensor, and
the estimation unit estimates the time-series information regarding the posture of the finger based on sensing data detected by the IMU sensor.

14. The information processing apparatus according to claim 1,
wherein the estimation unit estimates the time-series information regarding the posture of the finger in contact with the object on the basis of sensing data detected by a contact sensor that detects a contact operation of the finger with respect to the object.

15. The information processing apparatus according to claim 14,
wherein the estimation unit estimates the time-series information regarding the posture of the finger in contact with the object on the basis of position information of the object before the contact operation of the finger with respect to the object is performed, a change amount of a position of the object before and after the contact operation of the finger with respect to the object is performed, and contact position information of the finger with respect to the object.

16. The information processing apparatus according to claim 14,
wherein the estimation unit estimates an angle of a PIP joint of the finger on the basis of a distance between an MP joint and the PIP joint of the finger, a distance between the PIP joint and a fingertip of the finger, a position of the MP joint of the finger, and a position of the fingertip of the finger as the time-series information regarding the posture of the finger in contact with the object.

17. The information processing apparatus according to claim 1,
wherein the object is a keyboard, and
the operation of the finger with respect to the object is a key hitting operation of the finger with respect to the keyboard or a moving operation of moving a position of the finger with respect to the keyboard.

18. The information processing apparatus according to claim 1, further comprising
a provision unit configured to provide the time-series information regarding the posture of the finger estimated by the estimation unit to a user.

19. An information processing method comprising:
allowing a computer to estimate time-series information regarding a posture of a finger on the basis of image information including an operation of the finger with respect to an object including a contact operation of the finger with respect to the object and the object.

20. A program for causing a computer to function as an estimation unit that estimates time-series information regarding a posture of a finger on the basis of image information including an operation of the finger with respect to an object including a contact operation of the finger with respect to the object and the object.
